# EUROPEAN PATENT APPLICATION

(11) **EP 2 458 859 A1**
(43) Date of publication of application: **30.05.2012**
(21) Application number: 10801962.1
(22) Date of filing: 21.07.2010
(51) Int. Cl.: H04N 7/24

(54) **METHOD, COMMUNICATION SYSTEM AND RELATED DEVICE FOR STREAMING SERVICE**

(30) Priority: 21.07.2009 CN 200910157623; 23.10.2009 CN 200910207585
(71) Applicant: Huawei Technologies Co., Ltd., Longgang District, Shenzhen Guangdong 518129 (CN)
(72) Inventor: XU, Yangpo, Shenzhen Guangdong 518129 (CN); DI, Peiyun, Shenzhen Guangdong 518129 (CN); LIU, Xin, Shenzhen Guangdong 518129 (CN); HU, Changqi, Shenzhen Guangdong 518129 (CN); ZOU, Zixuan, Shenzhen Guangdong 518129 (CN); YAO, Jun, Shenzhen Guangdong 518129 (CN); AI, Changquan, Shenzhen Guangdong 518129 (CN); WANG, Yekui, Shenzhen Guangdong 518129 (CN); ZHANG, Weie, Shenzhen Guangdong 518129 (CN)
(74) Representative: Isarpatent
(86) International application number: PCT/CN2010/075335
(87) International publication number: WO 2011/009403

(57) **Abstract**

A method for implementing stream services is provided according to the embodiments of the present invention. The method includes: determining, by a server, a response message, in which the response message includes: at least one of an interval between a first data stream and a second data stream, latest data information of the second data stream, and rate change point information of the first data stream; and sending, by the server, the first data stream and the response message to a receiving end, so that the receiving end performs corresponding operation according to the response message. A communication system and a relevant device are further provided according to the embodiments of the present invention. The embodiments of the present invention can effectively improve data sending flexibility.

## Description

This application claims priority to Chinese Patent Application No. 200910157623.9, filed with the Chinese Patent Office on July 21, 2009 and entitled "METHOD AND COMMUNICATION SYSTEM FOR IMPLEMENTING STREAM SERVICES, AND RELEVANT DEVICE", and Chinese Patent Application No. 200910207585.3, filed with the Chinese Patent Office on October 23, 2009 and entitled "METHOD AND COMMUNICATION SYSTEM FOR IMPLEMENTING STREAM SERVICES, AND RELEVANT DEVICE", which are incorporated herein by reference in their entireties.

### FIELD OF THE INVENTION

The present invention relates to the field of communications technologies, and in particularly, to a method and a communication system for implementing stream services, and a relevant device.

### BACKGROUND OF THE INVENTION

With the development of multicast technologies, a media stream is transmitted usually through the multicast technologies in a point-to-multipoint media stream transmission system, for example, media services such as an Internet Protocol Television (IPTV), a network television, a mobile television, or a Digital Television (DTV) widely adopts the multicast technologies.

Quality of Experience (QoE) of a user is to evaluate the quality of a service from the perspective of the experience of a common user. In an IPTV service, a switch speed between multicasts is an important index of affecting the QoE, and the switch period is a period from the time of sending a switch instruction by the user to the time of watching a new multicast program. In order to reduce a switch delay of a receiving end between different multicasts, a rapid switch or a rapid multicast acquisition method may be used. In such a method, the receiving end first receives a unicast stream (rapidly sent unicast stream generally), and after a period of time, when a payload of the unicast stream is about to be the same as a payload of the multicast stream or the unicast stream catches up with the multicast stream, the receiving end is added into a multicast group to receive multicast data.

In the whole process, the unicast stream provided by the server should meet the following requirements.
(1) The unicast stream needs to be sent from Key Information such as a starting place of a Group of Picture (GOP), and only such a manner can enable the receiving end to process the data sent from a multicast source.
(2) After the unicast stream is over, the data buffered in a receiving end should be greater than or equal to a first buffer requirement (such as a minimum buffer requirement). The first buffer requirement may be relevant to application, for example, forward error correction or retransmission is required after the unicast stream is over.

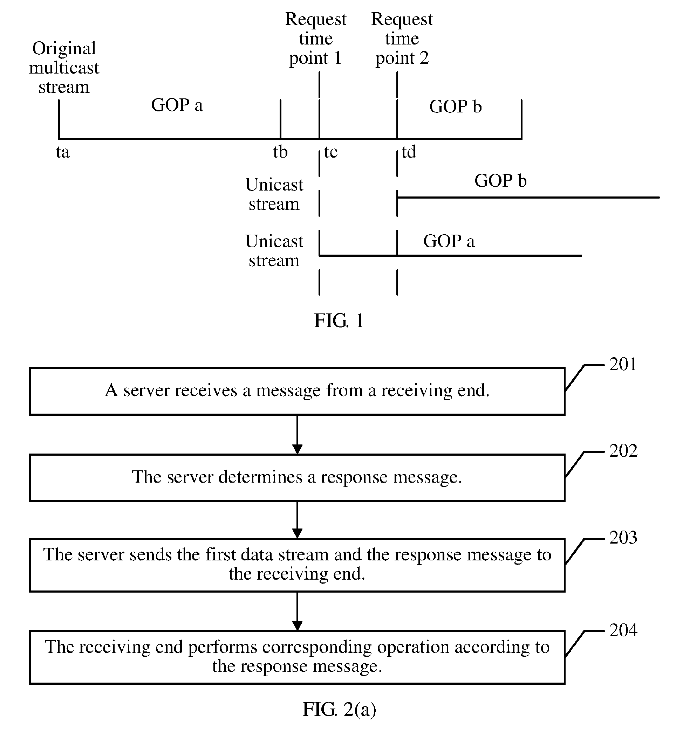

Specifically, FIG. 1 is a schematic selection diagram of a starting point of a unicast stream. Referring to FIG. 1, tc and td are different request time points of two receiving ends, and after the server receives a channel switch request, in order to enable the receiving end to decode video data after the receiving end receives the video data, the unicast stream needs to be sent from the starting place of the GOP. As for the request at the time of tc, if the server begins to send a first data stream from the nearest starting point tb of GOP b, the first buffer requirement cannot be met, so the starting point needs to be put ahead to the starting place of GOP a for sending. As for the request at the time of td, since the data between tb and td may meet the first buffer requirement, the server may begin to send the data from the starting place of GOP b. In this way, as for the request at the time of tc, a time shift between the unicast stream and the multicast stream is (tc-ta), and as for the request at the time of td, a time shift between the unicast stream and the multicast stream is (td-tb), in which (tc-ta) > (td-tb). Therefore, the same multicast channel program received by the two receiving ends is asynchronous, and the server sends different data amount to the two receiving ends and provides the two receiving ends with the services of different time lengths.

It can be known from the above description that, after the server receives the multicast switch request, if the sending of the unicast stream from a random access point of the nearest media data cannot meet the minimum buffer requirement, one or more random access points of the media data need to be put ahead for sending, which limits flexibility of sending the data from the server to the receiving end.

In such a process, the time of adding the receiving end into the multicast group is notified by the server, and when the notification message is lost, the receiving end cannot determine the time of adding into the multicast group. After a period of time, the receiving end has no data for playing. If the updated time message of adding into the multicast group delivered by the server is lost, the receiving end may be too early or too late to be added into the multicast group, causing a double stream problem or a problem that the unicast stream cannot catch up with the multicast stream.

### SUMMARY OF THE INVENTION

Embodiments of the present invention provide a method and a communication system for implementing stream services, and a relevant device, which can improve data sending flexibility.

An embodiment of the present invention provides a method for implementing stream services, where the method includes: determining, by a server, a response message, in which the response message includes: at least one of an interval between a first data stream and a second data stream, latest data information of the second data stream, and rate change point information of the first data stream; and sending, by the server, the first data stream and the response message to a receiving end, so that the receiving end performs corresponding operation according to the response message.

An embodiment of the present invention provides a method for implementing stream services, where the method includes: receiving, by a receiving end, a response message from a server, in which the response message includes at least one of an interval between a first data stream and a second data stream, latest data information of the second data stream, and rate change point information of the first data stream; and performing, by the receiving end, corresponding operation according to the response message.

An embodiment of the present invention provides a method for implementing stream services, where the method includes: receiving, by a server, a message from a receiving end, in which the message includes data processing capability information of the receiving end; determining, by the server, a response message according to the data processing capability information, in which the response message includes at least one of an interval between a first data stream and a second data stream, latest data information of the second data stream, time required for catching up with the second data stream by the first data stream, and rate change point information of the first data stream; and sending, by the server, the first data stream and the response message to the receiving end, so that the receiving end performs data processing according to the response message.

An embodiment of the present invention provides a method for implementing stream services, where the method includes: determining, by a server, a first message, in which the first message includes at least one of an interval between a first data stream and a second data stream, latest data information of the second data stream, time required for catching up with the second data stream by the first data stream, and rate change point information of the first data stream; and sending, by the server, the first data stream and the first message to a receiving end, so that the receiving end performs data processing according to the first message.

An embodiment of the present invention provides a communication system, where the communication system includes: a server, configured to determine a response message, in which the response message includes: at least one of an interval between a first data stream and a second data stream, latest data information of the second data stream, and rate change point information of the first data stream, and send the first data stream and the response message to a receiving end; and the receiving end, configured to receive the first data stream and the response message from the server, and perform corresponding operation according to the response message.

An embodiment of the present invention provides a communication system, where the communication system includes: a server, configured to receive a message from a receiving end, in which the message includes data processing capability information of the receiving end, determine a response message according to the data processing capability information, in which the response message includes at least one of an interval between a first data stream and a second data stream, latest data information of the second data stream, time required for catching up with the second data stream by the first data stream, and rate change point information of the first data stream, and send the first data stream and the response message to the receiving end; and the receiving end, configured to receive the first data stream and the response message from the server, and perform data processing according to the response message.

An embodiment of the present invention provides a communication system, where the communication system includes: a server, configured to determine a first message, in which the first message includes at least one of an interval between a first data stream and a second data stream, latest data information of the second data stream, time required for catching up with the second data stream by the first data stream, and rate change point information of the first data stream, and send the first data stream and the first message to a receiving end; and the receiving end, configured to receive the first data stream and the first message sent from the server, and perform data processing according to the first message.

An embodiment of the present invention provides a server, where the server includes: a response generation module, configured to determine a response message, in which the response message includes: at least one of an interval between a first data stream and a second data stream, latest data information of the second data stream, and rate change point information of the first data stream; and a sending module, configured to send the first data stream and the response message to a receiving end, so that the receiving end performs corresponding operation according to the response message.

An embodiment of the present invention provides a server, where the server includes: a receiving unit, configured to receive a message from a receiving end, in which the message includes data processing capability information of the receiving end; a determining unit, configured to determine a response message according to the data processing capability information, in which the response message includes at least one of an interval between a first data stream and a second data stream, latest data information of the second data stream, time required for catching up with the second data stream by the first data stream, and rate change point information of the first data stream; and a sending unit, configured to send the first data stream and the response message to the receiving end, so that the receiving end performs data processing according to the response message.

An embodiment of the present invention provides a server, where the server includes: a determining unit, configured to determine a first message, in which the first message includes at least one of an interval between a first data stream and a second data stream, latest data information of the second data stream, time required for catching up with the second data stream by the first data stream, and rate change point information of the first data stream; and a sending unit, configured to send the first data stream and the first message to a receiving end, so that the receiving end performs data processing according to the first message.

An embodiment of the present invention provides a network device, where the device includes: a receiving module, configured to receive a response message from a server, in which the response message includes: at least one of an interval between a first data stream and a second data stream, latest data information of the second data stream, and rate change point information of the first data stream; and a determining module, configured to determine interval information according to the response message, and determine, according to the interval information, time of obtaining the second data stream.

An embodiment of the present invention provides a network device, where the device includes: a data receiving unit, configured to receive a first data stream and a message from a server, in which the message from the server includes: at least one of an interval between a first data stream and a second data stream, latest data information of the second data stream, time required for catching up with the second data stream by the first data stream, and rate change point information of the first data stream; and a data processing control unit, configured to perform data processing according to the message from the server.

It can be seen from the above technical solutions that, the embodiments of the present invention have the following advantages.

Through the embodiments of the present invention, the server may send information such as the interval between the first data stream and the second data stream to the receiving end, so that the receiving end can acquire the information of the sent first data stream and the second data stream, and subsequent operation is performed according to the information, for example, the time of requesting the second data stream is calculated or a data processing speed of the receiving end is adjusted, which may prevent the server from calculating and delivering the time of requesting the second data stream by the receiving end. If the server delivers the time of requesting the second data stream, a double stream problem due to the loss of the information delivered by the server or the risk that the first data stream cannot catch up with the second data stream may be avoided, and the flexibility of sending the data from the server to the receiving end is also improved.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a schematic selection diagram of a starting point of a first data stream;
FIG. 2(a) is a schematic diagram of an embodiment of a method for implementing stream services according to the present invention;
FIG. 2(b) is a schematic diagram of a message format of a response message according to an embodiment of the present invention;
FIG. 2(c) is a schematic diagram of another message format of a response message according to an embodiment of the present invention;
FIG. 3 is a schematic diagram of another embodiment of a method for implementing stream services according to the present invention;
FIG. 4 is a schematic diagram of another embodiment of a method for implementing stream services according to the present invention;
FIG. 5 is a schematic diagram of another embodiment of a method for implementing stream services according to the present invention;
FIG. 6 is a schematic diagram of a stream service implementing process coordinate according to another embodiment of the present invention;
FIG. 7 is a schematic diagram of another stream service implementing process coordinate according to an embodiment of the present invention;
FIG. 8 is a schematic diagram of another embodiment of a method for implementing stream services according to the present invention;
FIG. 9 is a schematic diagram of another embodiment of a method for implementing stream services according to the present invention;
FIG. 10 is a schematic diagram of another embodiment of a method for implementing stream services according to the present invention;
FIG. 11 is a schematic diagram of an embodiment of a communication system according to the present invention;
FIG. 12 is a schematic diagram of an embodiment of a server according to the present invention;
FIG. 13 is a schematic diagram of another embodiment of a server according to the present invention;
FIG. 14 is a schematic diagram of another embodiment of a server according to the present invention;
FIG. 15 is a schematic diagram of an embodiment of a network device according to the present invention; and
FIG. 16 is a schematic diagram of another embodiment of a network device according to the present invention.

### DETAILED DESCRIPTION OF THE EMBODIMENTS

The technical solutions in the embodiments of the present invention will be clearly and completely described in the following with reference to the accompanying drawings in the embodiments of the present invention. It is obvious that the embodiments to be described are only a part rather than all of the embodiments of the present invention. All other embodiments obtained by persons skilled in the art based on the embodiments of the present invention without creative efforts shall fall within the protection scope of the present invention.

Embodiments of the present invention provide a method and a communication system for implementing stream services, and a relevant device, so as to improve data sending flexibility.

In the embodiment of the present invention, a receiving end may be a client device for requesting stream services, such as a computer, a media player, or a cell phone, and a device for providing the receiving end with the stream services may be a network side device, such as a server. The server is taken as an example in the embodiment of the present invention for illustration, but the device is not limited to the server.

In the embodiment of the present invention, latest data information of a second data stream may be latest serial number (SN) information of the second data stream, or latest time information (for example, a Time Stamp (TS)) of the second data stream. The latest data information of the second data stream in the subsequent embodiments may be as described in the above, but is not limited to the above description.

In the embodiment of the present invention, rate change point information of a first data stream includes rate change time of the first data stream, such as a time difference between the time when the rate of the first data stream starts to change and the time of starting to send the first data stream, or a media TS difference between the time when the rate of the first data stream starts to change and the media timestamp of a first data packet at a starting position of the first data stream, or an interval between the first data stream when the rate changes and the second data stream, or data amount buffered by the receiving end or buffer time when the rate of the first data stream changes, or the reduced data amount or time in the interval between the first data stream and the second data stream when the rate of the first data stream changes. The rate change point information of the first data stream in the subsequent embodiments may be as described in the above, but is not limited to the above description.

In the embodiment of the present invention, the interval (or offset information) may be the data amount information such as the number of packets, a difference between SNs, or the number of bytes, or may be time information, for example a difference between media TSs, or a difference between local time. The interval in the subsequent embodiments may be as described in the above, but is not limited to the above description.

In the embodiment of the present invention, the interval between the first data stream and the second data stream may be directly obtained from a response message delivered by the server, or may be obtained by calculating according to the latest data information of the second data stream in the response message and the information of the first data packet at the starting position of the first data stream, or may be obtained by calculating according to the latest data information of the second data stream in the response message and the information of the first data packet at the starting position of the first data stream received by the receiving end. The interval between the first data stream and the second data stream in the subsequent embodiments may be as described in the above, but is not limited to the above description.

In the embodiment of the present invention, a buffer requirement refers to a requirement that the data amount buffered by the receiving end or the buffer time should meet. The buffer requirement may be an actual buffer requirement or a converted buffer requirement, a first buffer requirement may be minimum data amount or time required for smooth data processing by the receiving end, and a second buffer requirement may be maximum data amount capable of being buffered by the receiving end or the maximum buffer time. The buffer requirement, the first buffer requirement and the second buffer requirement in the subsequent embodiments may be as described in the above, but are not limited to the above description.

Referring to FIG. 2(a), an embodiment of a method for implementing stream services according to the present invention includes the following steps 201, 202, 203 and 204.

Step 201: A server receives a message from a receiving end.

The message of this embodiment in an actual application may be a channel switch request, a multicast switch request, a Rapid Acquisition of Multicast RTP Sessions (RAMS) request, or request messages of other types, and the specific type is not limited herein.

Step 202: The server determines a response message.

In this embodiment, the server can determine the response message after receiving the message sent from the receiving end, in which the response message may include at least one of starting position information of a first data stream, an interval between the first data stream and a second data stream, and latest data information of the second data stream. The response message may further include time required for catching up with the second data stream by the first data stream, rate change point information of the first data stream, or data processing control information.

The rate change point information of the first data stream includes rate change time of the first data stream, or an interval between the first data stream when the rate changes and the second data stream, or data amount buffered by the receiving end or buffer time when the rate of the first data stream changes, or the reduced data amount or time in the interval between the first data stream and the second data stream when the rate of the first data stream changes. The rate change point information of the first data stream in the subsequent embodiments may be as described in the above, but is not limited to the above description.

It should be noted that, the first data stream of this embodiment may be a unicast stream or a multicast stream in an actual application, and the second data stream may also be the unicast stream or the multicast stream. In this embodiment and the subsequent embodiments, the unicast stream may be used as the first data stream, and the multicast stream may be used as the second data stream. It can be understood that, in the actual application, other manners may also be used, which are not limited herein.

The interval (or offset information) in the embodiment of the present invention may be data amount information such as the number of packets, a difference between SNs, data size, or time information. The latest data information of the second data stream may be latest SN information of the second data stream and/or latest time information (for example, a TS) of the second data stream.

It should be noted that, in the actual application, step 201 may not be executed in the solution of this embodiment, that is, the server does not need to determine the response message only after receiving the message from the receiving end, and may directly determine the response message according to data information in a local buffer of the server, in which the response message may also include at least one of starting position information of the first data stream, the interval between the first data stream and the second data stream, the latest data information of the second data stream, the time required for catching up with the second data stream by the first data stream, the rate change point information of the first data stream, and the data processing control information.

Step 203: The server sends the first data stream and the response message to the receiving end.

After the server generates the response message, the server can send the response message and the first data stream to the receiving end.

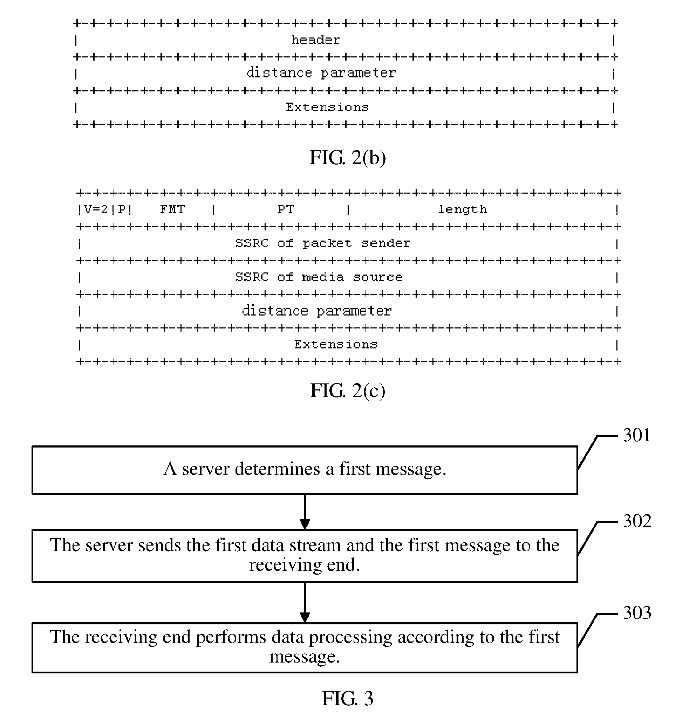

It should be noted that, in this embodiment, the server may send the response message to the receiving end through multiple manners, and one of the manners may be as shown in FIG. 2(b), in which a distance parameter is a parameter of the interval, the length of the field may be 16 bits, and the length of the distance parameter field is not limited herein.

The interval may be a difference value between the SNs of Packet 1 and Packet 2, a difference value between corresponding time (Presentation TSs (PTSs), Decoding TSs (DTSs), or TSs) of Packet 1 and Packet 2, or the size of the data amount (the number of bytes) between Packet 1 and Packet 2.

Packet 1 refers to a label of a starting data packet of the first data stream, and Packet 2 refers to a label of a latest data packet of the second data stream.

An extension field and the distance parameter field have no required sequence between.

Another manner may be as shown in FIG. 2 (c), that is, in a Real-time Control Protocol (RTCP), the distance parameter field may include the following formats.

### 1) The interval between the first data stream and the second data stream is included.

The interval may be a difference value between the SNs of Packet 1 and Packet 2, a difference value between corresponding time (PTSs, DTSs, or TSs) of Packet 1 and Packet 2, or the size of the data amount (the number of bytes) between Packet 1 and Packet 2.

Packet 1 refers to a label of a starting data packet of the first data stream, and Packet 2 refers to a label of a latest data packet of the second data stream.

### 2) FirstSN and NewSN are included.

FirstSN indicates the SN of Packet 1, and NewSN indicates the SN of Packet 2, and the receiving end may calculate the interval between the first data stream and the second data stream according to a difference between the two SNs.

It should be noted that, FirstSN may not be sent, and merely NewSN is sent. The receiving end may judge FirstSN according to the received data, and then calculate the interval between the first data stream and the second data stream.

It should be noted that, the sequence of FirstSN and NewSN is not limited.

### 3) FirstPTS and NewPTS are included.

FirstPTS indicates a PTS of Packet 1, and NewPTS indicates a PTS of Packet 2, and the receiving end may calculate the interval between the first data stream and the second data stream according to a difference between the two PTSs.

It should be noted that, FirstPTS may not be sent, and merely NewPTS is sent. The receiving end may judge FirstPTS according to the received data, and then calculate the interval between the first data stream and the second data stream.

It should be noted that, the sequence of FirstPTS and NewPTS is not limited.

### 4) FirstPTS and NewPTS are included.

FirstPTS indicates a DTS of Packet 1, and NewPTS indicates a DTS of Packet 2, and the receiving end may calculate the interval between the first data stream and the second data stream according to a difference between the two DTSs.

It should be noted that, FirstDTS may not be sent, and merely NewDTS is sent. The receiving end may judge FirstDTS according to the received data, and then calculate the interval between the first data stream and the second data stream.

It should be noted that, the sequence of FirstDTS and NewDTS is not limited.

### 5) FirstTS and NewTS are included.

FirstTS indicates a TS of Packet 1, and NewTS indicates a TS of Packet 2, and the receiving end may calculate the interval between the first data stream and the second data stream according to a difference between the two TSs.

It should be noted that, FirstTS may not be sent, and merely NewTS is sent. The receiving end may judge FirstTS according to the received data, and then calculate the interval between the first data stream and the second data stream.

It can be understood that, the interval between the first data stream and the second data stream may be sent by using the above manner in the subsequent embodiments.

It should be noted that, the sequence of FirstTS and NewTS is not limited.

The distance parameter field of this embodiment may also be borne through an RAMS-I message, and the interval information between the first data stream and the second data stream mentioned in the above, that is, the FirstSN information, the NewSN information, the FirstPTS information, the NewPT information, the FirstDTS information, the NewDTS information, the FirstTS information, and the NewTS information, may also adopt a type-length-value (TLV) format.

Step 204: The receiving end performs corresponding operation according to the response message.

In this embodiment, the server sends the response message to the receiving end, and then the receiving end can perform the corresponding operation according to the response message.

It should be noted that, the specific operation may be various, such as performing data processing or determining the time of obtaining the second data stream, which is respectively described in the following.

### 1. The receiving end performs data processing according to the response message.

In such a manner, the message sent from the receiving end to the server may carry data processing capability information of the receiving end, in which the data processing capability information includes information indicating whether the receiving end supports rapid/slow data processing, and a degree of the supported rapid/slow data processing.

It should be noted that, the data processing of this embodiment may be decoding, playing, data reading, data consumption, data tailoring, data duplication, data insertion, or data processing of other types. The data processing in the subsequent embodiments may be as described in the above, but is not limited to the above description.

In this embodiment, the server determines the response message according to the supported slow/rapid data processing capability information and data information buffered by the server, in which the response message includes at least one or more of starting position information of the first data stream, the interval (or offset information) between the first data stream and the second data stream, latest data information of the second data stream, a lasting period of the first data stream, a speed of the first data stream, the time required for catching up with the second data stream by the first data stream, rate change point information of the first data stream, data processing control information, or estimated first data amount buffered by the receiving end or the buffer time, and is not limited to the above information.

It should be noted that, the first data stream of the embodiment of the present invention may be a unicast stream or a multicast stream in an actual application, and the second data stream may also be the unicast stream or the multicast stream. In this embodiment and the subsequent embodiments, the unicast stream may be used as the first data stream, and the multicast stream may be used as the second data stream. It can be understood that, in the actual application, other manners may also be used, which are not limited herein.

The interval (or offset information) in this embodiment may be data amount information such as the number of packets, a difference between SNs, data size, or time information. The latest data information of the second data stream may be latest SN information of the second data stream and/or latest time information (for example, a TS) of the second data stream.

It should be noted that, in this embodiment and the subsequent embodiments, the described intervals may all be as described in the above, but are not limited to the above description.

In this embodiment, the server may use a default first buffer requirement and/or a second buffer requirement. The buffer requirement may refer to a requirement that the data amount buffered by the receiving end or the buffer time should meet.
In this embodiment, the buffer requirement may be an actual buffer requirement or a converted buffer requirement, the first buffer requirement may be minimum data amount or time required for smooth data processing by the receiving end, and the second buffer requirement may be maximum data amount capable of being buffered by the receiving end or the maximum buffer time.
The buffer requirement, the first buffer requirement and the second buffer requirement in the subsequent embodiments may be as described in the above, but are not limited to the above description.

In this embodiment, the first data amount or time may be data amount buffered by the receiving end or buffer time when the first data stream is over or after the first data stream is over, data amount buffered by the receiving end or buffer time when the first data stream catches up with the second data stream or after the first data stream catches up with the second data stream, data amount buffered by the receiving end or buffer time in a certain data processing start condition, or data amount buffered by the receiving end or buffer time after a period of time.
The first data amount or time in the subsequent embodiments may be as described in the above, but is not limited to the above description.

In this embodiment, a method for determining the interval (or offset information) between the first data stream and the second data stream, and for determining a start position of sending the first data stream may be as shown in FIG. 1. It is supposed that the data amount or time of the server between a point tb and a point tc is relatively small, and the server estimates that the data amount buffered by the receiving end or the buffer time is less than the first buffer requirement in a pre-configuration condition. However, if the receiving end has a slow data processing capability, for example, the receiving end may perform the data processing at 3/4 times of a normal speed, the server may begin to send the first data stream at the point tb, the interval (or offset information) is the data amount or time between the point tb and the point tc, and the start position information of sending the first data stream is the data information at the point tb. If the receiving end does not have the slow data processing capability, the server may begin to send the first data stream at the point ta, the interval (or offset information) is the data amount or time between the point ta and the point tc, and the start position information of sending the first data stream is the data information at the point ta. The method for determining the interval (or offset information) between the first data stream and the second data stream, and for determining a start position of sending the first data stream may be as described in the above, but is not limited to the above method.

In this embodiment, the data processing control information may include a rapid data processing parameter, a slow data processing parameter, or a delay data processing parameter. The data processing parameter may be an indication of rapid data processing/slow data processing/delay data processing, speed information of rapid data processing/slow data processing, time information of rapid data processing/slow data processing, or time information of delay data processing. The speed information may be a data processing speed, a multiple of a normal speed, inserting m frames or duplicating n frames or delaying n frames, presentation interval between changed frames or images, or other information capable of obtaining the data processing speed. The time information may be time length, x inserted or duplicated or delayed frames in all, or other information capable of obtaining the time information.

The data processing control information in the subsequent embodiments may be as described in the above, but is not limited to the above description.
The server may estimate the data amount buffered by the receiving end or the buffer time in the pre-configuration condition. When the data amount or time is less than a pre-configured first buffer requirement, the slow data processing parameter or the delay data processing parameter is determined; and when the data amount or time is greater than a pre-configured second buffer requirement, the rapid data processing parameter or the delay data processing parameter is determined.

After the server generates the response message, the server can send the response message and the first data stream to the receiving end.

In this embodiment, after the receiving end receives the first data stream and the response message, if the response message includes the interval (or offset information) between the first data stream and the second data stream, or the estimated first data amount buffered by the receiving end or the buffer time, the receiving end may determine the data amount or time corresponding to a real interval according to the interval (or offset information) between the first data stream and the second data stream or the estimated first data amount buffered by the receiving end or the buffer time, and judges whether the data amount or time corresponding to the real interval meets the pre-configured first buffer requirement. If the data amount or time corresponding to the real interval is less than the first buffer requirement, slow processing is performed on the first data stream; if the data amount or time corresponding to the real interval is greater than the pre-configured second buffer requirement, rapid processing is performed on the first data stream; and if the data amount or time corresponding to the real interval is less than or equal to the pre-configured second buffer requirement and is greater than or equal to the pre-configured first buffer requirement, normal data processing is performed on the first data stream.

In this embodiment, the real interval may be an actual interval (or offset information) between the first data stream and the second data stream, may be an interval (or offset information) obtained by adding the actual interval to an interval calculated by the receiving end in a start condition, may be an interval (or offset information) between the second data stream and a data stream that is processed by the receiving end in the condition that the first data stream is over and/or the first data stream catches up with the second data stream and/or in a certain data processing start condition and/or after a period of time, or may be the data amount buffered by the receiving end or the buffer time in the condition that the first data stream is over and/or the first data stream catches up with the second data stream and/or in a certain data processing start condition and/or after a period of time.

The real interval in the subsequent embodiments may be as described in the above, but is not limited to the above description.
If the response message includes the starting point position information of the first data stream, and/or the latest data information of the second data stream, and/or the lasting period of the first data stream and speed information of the first data stream, and/or rate change point information of the first data stream, and/or the time of catching up with the second data stream by the first data stream, the receiving end may calculate the interval (or offset information) between the first data stream and the second data stream according to the information, and then determines the data amount or time corresponding to the real interval, and afterward performs the processing same as the above manner.

In this embodiment, the receiving end may acquire that the service data stream between the time tc and the time tb is a half of the first buffer requirement according to the response message, and then the receiving end may perform slow data processing at 3/4 times of a normal speed or may perform the data processing after a period of time.

If the response message includes the data processing control information, after the receiving end receives the response message, the receiving end performs rapid data processing or slow data processing or delay data processing on the first data stream according to the rapid data processing parameter, the slow data processing parameter, or the delay data processing parameter.

It should be noted that, in this embodiment, the first buffer requirement is less than or equal to the second buffer requirement, the pre-configuration condition may be a condition that the first data stream is over, and/or may be a condition the first data stream catches up with the second data stream, and/or may be a certain data processing start condition, and/or may be a period of time. In this embodiment, if the message in step 201 further carries the buffer requirement which may be the first buffer requirement or the second buffer requirement, and then the first buffer requirement or the second buffer requirement in step 202 may use the first buffer requirement or the second buffer requirement carried in the message.

In this embodiment, the receiving end receives the second data stream at appropriate time. The appropriate time may be time during a receiving process of the first data stream or after the first data stream is over.

This embodiment may be applied to media services such as an IPTV, a network television, a mobile television, or a DTV, or may also be applied to other services related to a stream switch. For example, the receiving end first receives the first data stream (rapidly sent first data stream generally), and after a period of time, if payloads of the first data stream and the second data stream are about to be the same or the first data stream catches up with the second data stream, the receiving end receives the second data stream.

In this embodiment, the server may send information such as the interval (or offset information) between the first data stream and the second data stream to the receiving end, so that the receiving end can perform data processing according to the information, thereby improving the data sending flexibility from the server to the receiving end.

Likewise, referring to FIG. 2(a), another embodiment of a method for implementing stream services according to the present invention includes the following steps.

Step 201: A server receives a message from a receiving end.
In this embodiment, the message may include a data processing start condition of the receiving end.

Step 202: The server determines a response message according to the message received from the receiving end.

In this embodiment, the response message may carry the data processing start condition suggested by the server. When the server determines the response message, a default first buffer requirement and a second buffer requirement may be used. The server estimates data amount buffered by the receiving end or buffer time in a pre-configuration condition, and when the data amount or time is less than a pre-configured first buffer requirement, the server may suggest using a larger data processing start condition; and when the data amount or time is greater than a pre-configured second buffer requirement, the server may suggest using a smaller data processing start condition. For example, if the data processing start condition of the receiving end is 300 ms, the default first buffer requirement is 500 ms, and the server estimates that the buffer time of the receiving end is 400 ms when the first data stream is over under 100 ms start delay, the server may suggest that the start delay of the receiving end is 200 ms.

The pre-configuration condition of this embodiment may be a condition that the first data stream is over, and/or may be a condition that the first data stream catches up with the second data stream, and/or may be a certain data processing start condition, and/or may be a period of time.

Step 203: The server sends the response message and the first data stream to the receiving end.

Step 204: The receiving end performs data processing on the first data stream according to the received response message.
In this embodiment, after receiving the response message, the receiving end may determine the data processing start condition suggested by the server to perform the data processing.
In this embodiment, the receiving end receives a second data stream at appropriate time. The appropriate time may be time during a receiving process of the first data stream or after the first data stream is over.

This embodiment may be applied to media services such as an IPTV, a network television, a mobile television, or a DTV, or may also be applied to other services related to a stream switch. For example, the receiving end first receives the first data stream (rapidly sent first data stream generally), and after a period of time, if payloads of the first data stream and the second data stream are about to be the same or the first data stream catches up with the second data stream, the receiving end receives the second data stream.

In this embodiment, the server may send the information such as the first data stream and a data processing start condition to the receiving end, so that the receiving end can perform data processing according to the data processing start condition, thereby improving data sending flexibility from the server to the receiving end.

Referring to FIG. 3, another embodiment of a method for implementing stream services according to the present invention includes the following steps.

Step 301: A server determines a first message.
In this embodiment, the server may determine the first message according to data information buffered by the server, in which the first message includes at least one or more of starting position information of a first data stream, an interval (or offset information) between the first data stream and a second data stream, latest data information of the second data stream, a lasting period of the first data stream, a speed of the first data stream, the time required for catching up with the second data stream by the first data stream, rate change point information of the first data stream, data processing control information, or estimated first data amount buffered in a receiving end or buffer time, and is not limited to the above information.

It should be noted that, in this embodiment, the process of determining the above information by the server is similar to step 202 in the embodiment shown in FIG. 2(a), which is not described herein again.

The interval (or offset information) between the first data stream and the second data stream may be data amount information such as the number of packets, a difference between SNs, data size, or time information. The latest data information of the second data stream may be latest SN information of the second data stream and/or latest time information (for example, a TS) of the second data stream.

Step 302: The server sends the first data stream and the first message to the receiving end. In this embodiment, step 302 is similar to step 203 in the embodiment shown in FIG. 2(a), and the response message in step 203 is merely replaced by the first message in step 302, which is not described herein again.

Step 303: The receiving end performs data processing according to the first message.
In this embodiment, step 303 is similar to step 204 in the embodiment shown in FIG. 2(a), and the response message in step 204 is merely replaced by the first message in step 303, which is not described herein again.
In this embodiment, the receiving end receives the second data stream at appropriate time. The appropriate time may be time during a receiving process of the first data stream or after the first data stream is over.

This embodiment may be applied to media services such as an IPTV, a network television, a mobile television, or a DTV, or may also be applied to other services related to a stream switch. For example, the receiving end first receives the first data stream (rapidly sent first data stream generally), and after a period of time, if payloads of the first data stream and the second data stream are about to be the same or the first data stream catches up with the second data stream, the receiving end receives the second data stream.
It should be noted that, in this embodiment, before step 301, the method may further include one step that is an optional step.

The server receives a message from a receiving end.

The message may be a channel switch request, a multicast switch request, an RAMS request, or request messages of other types, the specific type is not limited thereto, and the message may further carry a buffer requirement of the receiving end.
If the message may further carry the buffer requirement of the receiving end, in step 302, the server determines, according to the buffer requirement included in the message, a start position of sending the first data stream, and further determines the first message according to the start position of sending the first data stream and the data information buffered by the server, which is specifically as follows.

The receiving end calculates requirement information of the receiving end according to data processing capability information of the receiving end and/or a data processing start condition requirement, in which the specific requirement information may be at least one or more of a minimum interval (or offset information) between the first data stream and the second data stream, the starting position information of the first data stream, the latest data information of the second data stream, the lasting period of the first data stream, the speed of the first data stream, the time required for catching up with the second data stream by the first data stream, rate change point information of the first data stream, the data processing control information, or the estimated first data amount buffered in a receiving end or the buffer time, and is not limited to the above information. Then, the receiving end sends a message to the server, in which the message carries the requirement information or the buffer requirement through the conversion of the requirement information, and the requirement information may be the time or the data amount.
After receiving the message from the receiving end, the server determines actual requirement information according to the buffer requirement of the receiving end or the requirement information of the receiving end, and sends the actual requirement information to the receiving end, in which the actual requirement information may be carried in the first message.

The actual requirement information may be at least one or more of the interval (or offset information) between the first data stream and the second data stream, the starting position information of the first data stream, the latest data information of the second data stream, the lasting period of the first data stream, the speed of the first data stream, the time required for catching up with the second data stream by the first data stream, the rate change point information of the first data stream, the data processing control information, or the estimated first data amount buffered by the receiving end or the buffer time, and is not limited to the above information.
After receiving the actual requirement information from the server, the receiving end may first judge whether the actual requirement information is within a pre-configuration scope, if the actual requirement information is within the pre-configuration scope, the receiving end may determine the data processing start condition and/or a data processing speed to control the data processing according to the requirement information sent by the receiving end, or may also adjust the data processing speed and/or a data processing delay to control the data processing according to the actual requirement information; and if the actual requirement information is not within the pre-configuration scope, the receiving end adjusts the data processing speed and/or the data processing start condition to control the data processing according to the actual requirement information.

It should be noted that, after the receiving end sends the message, the receiving end may not necessarily wait for the actual requirement information send by the server, but may directly determines the data processing start condition and/or the data processing speed to control the data processing according to the requirement information or the buffer requirement send by the receiving end.

In this embodiment, the server may send information such as the interval between the first data stream and the second data stream to the receiving end, so that the receiving end can perform data processing according to the information, thereby improving the data sending flexibility from the server to the receiving end.

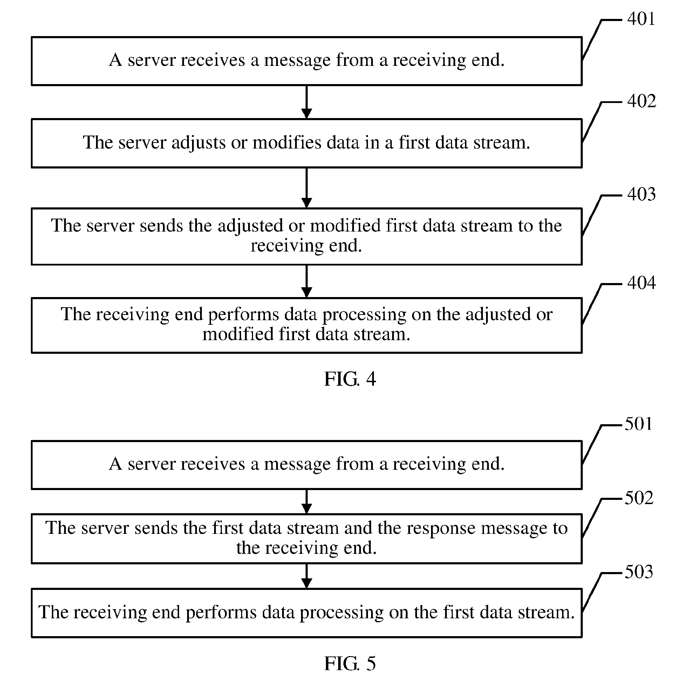

Referring to FIG. 4, another embodiment of a method for implementing stream services according to the present invention includes the following steps.

Step 401: A server receives a message from a receiving end.
The message of this embodiment in an actual application may be a channel switch request, a multicast switch request, an RAMS request, or request messages of other types, and the specific type is not limited herein.

Step 402: The server adjusts or modifies data in a first data stream.

Specifically, in this embodiment, the server may add information into the first data stream, delete data from the first data stream, modify data information, or re-compress data in the first data stream. The added data may be information of a previous frame repeatedly processed in n times, or time information of a previous frame repeatedly processed.
The deleting of the data may be to delete partial media data from the data stream.

The modified data information may be decoding time information, presentation time information, sent time information, or media information in the data stream.
The recompressing of the data may be to transcode a new data stream after a part of original data is deleted.

In this embodiment, the server may use a default first buffer requirement and/or a second buffer requirement, and if the message in step 401 includes the first buffer requirement and/or the second buffer requirement, the server may use the first buffer requirement and/or the second buffer requirement in step 401.

The server estimates the data amount buffered by the receiving end or the buffer time in a pre-configuration condition. When the data amount or the time is less than a pre-configured first buffer requirement, the server may add some data into the first data stream, or modifies some data information, so that a time length of processing the first data stream by the receiving end is increased; and when the data amount or the time is greater than a pre-configured second buffer requirement, the server may delete some data from the first data stream, re-compress the data, or modify some data information, so that the time of processing the first data stream by the receiving end is reduced.

The definition of the first buffer requirement and the second buffer requirement in this embodiment is the same as the definition in the embodiment shown in FIG. 2(a), which is not described herein again.

In this embodiment, the buffer requirement may be an actual buffer requirement or a converted buffer requirement.

The pre-configuration condition of this embodiment may be a condition that the first data stream is over, and/or may be a condition that the first data stream catches up with the second data stream, and/or may be a certain data processing start condition, and/or may be a period of time.

Step 403: The server sends the adjusted or modified first data stream to the receiving end.

After adjusting or modifying the first data stream, the server can send the first data stream to the receiving end.

Step 404: The receiving end performs data processing on the adjusted or modified first data stream.

After receiving the adjusted or modified first data stream, the receiving end can directly perform data processing on the first data stream.

In this embodiment, the receiving end receives the second data stream at appropriate time. The appropriate time may be time during a receiving process of the first data stream or after the first data stream is over.

This embodiment may be applied to media services such as an IPTV, a network television, a mobile television, or a DTV, or may also be applied to other services related to a stream switch. For example, the receiving end first receives the first data stream (rapidly sent first data stream generally), and after a period of time, if payloads of the first data stream and the second data stream are about to be the same or the first data stream catches up with the second data stream, the receiving end receives the second data stream.

In this embodiment, the server may send a lengthened first data stream or a shortened first data stream to the receiving end, thereby improving data sending flexibility from the server to the receiving end.

Referring to FIG. 5, another embodiment of a method for implementing stream services according to the present invention includes the following steps.

Step 501: A server receives a message from a receiving end.

The message in an actual application may be a channel switch request, a multicast switch request, an RAMS request, or request messages of other types, and the specific type is not limited herein.

Step 502: The server sends a first data stream and a response message to the receiving end. In this embodiment, after receiving the message from the receiving end, the server sends the first data stream and the response message to the receiving end.

Step 503: The receiving end performs data processing on the first data stream.

After receiving the first data stream from the server, the receiving end can determine whether data amount of data stored in a local buffer or time meets a buffer requirement.

In this embodiment, the specific determining manner may be as follows.
(1) When the receiving end begins to receive the second data stream, after data of the second data stream is connected to the received first data stream, the receiving end may read the data in a local buffer, and then acquires whether the data amount in the buffer or the buffer time meets the buffer requirement, in which the buffer requirement may be a first buffer requirement or a second buffer requirement.
(2) When the receiving end begins to receive the second data stream, the receiving end may read the data in the local buffer, and then acquires whether the data amount in the buffer or the buffer time meets the buffer requirement, in which the buffer requirement may be a first buffer requirement or a second buffer requirement.
(3) In the process of receiving the first data stream, the receiving end may detect whether the data amount in the local buffer or the buffer time meets the buffer requirement in real time, in which the buffer requirement may be a second buffer requirement.

When the receiving end determines that the data amount in the local buffer or the buffer time is less than the first buffer requirement, slow data processing is performed on the first data stream; and when the receiving end determines that the data amount in the local buffer or the buffer time is greater than the second buffer requirement, rapid data processing is performed on the first data stream; and when the receiving end determines that the data in the local buffer meets both the first buffer requirement and the second buffer requirement, normal-speed data processing is performed on the first data stream.

It should be noted that, in step 501 of this embodiment, the message sent from the receiving end to the server may further include data processing capability information of the receiving end.

If the message sent from the receiving end to the server may further include the data processing capability information of the receiving end, the server may determine information such as a starting point of the first data stream according to the data processing capability information before step 502, and sends the first data stream and the response message to the receiving end. The receiving end executes the operation same as the operation in step 503, which is not described herein again.

In this embodiment, the receiving end may further judge whether the data amount in the local buffer or the buffer time is less than a pre-configured second buffer requirement, and if the data amount in the local buffer or the time is not less than the pre-configured second buffer requirement, rapid processing is performed on the first data stream.

In this embodiment, the definition of the first buffer requirement and the second buffer requirement is the same as the definition in the embodiment shown in FIG. 2(a), which is described herein again.

In this embodiment, the buffer requirement may be an actual buffer requirement or a converted buffer requirement, which is not limited herein.
In this embodiment, the receiving end receives the second data stream at appropriate time. The appropriate time may be time during a receiving process of the first data stream or after the first data stream is over.

This embodiment may be applied to media services such as an IPTV, a network television, a mobile television, or a DTV, or may also be applied to other services related to a stream switch. For example, the receiving end first receives the first data stream (rapidly sent first data stream generally), and after a period of time, if payloads of the first data stream and the second data stream are about to be the same or the first data stream catches up with the second data stream, the receiving end receives the second data stream.

In this embodiment, when the receiving end performs slow data processing, data amount of the first data stream sent by the server may be reduced, thereby reducing a load of the server. When the receiving end performs rapid data processing, a time shift between users may be reduced, so that the content watched by different users is synchronous as much as possible, thereby improving user experience. 2. The receiving end determines, according to the response message, time of obtaining the second data stream.

In the embodiment of the present invention, the time of obtaining the second data stream may be time of sending a message (for example, a Source Filtering Group Management Protocol (SFGMP) message) for requesting the second data stream or time of receiving the second data stream.

In an actual application, when the server sends a unicast stream to the receiving end in a period of time, the receiving end is added into a multicast group to receive an original multicast stream, and the time of adding the receiving end into the multicast group is generally determined by the server. In the embodiment of the present invention, a method for implementing stream services may generally include the following steps.
1) The receiving end sends a channel switch request to a channel switch server.
2) The server sends the response message to the receiving end.
3) The server rapidly sends a unicast stream to the receiving end.
4) During a process of providing services, the server sends a notification message at least once to instruct the receiving end to be added into the multicast group.
5) During a process of providing services, the server may adjust a data sending rate.
6) The receiving end is added into the multicast group according to time carried in the notification message.
7) The server sends a unicast stream at a reducing speed till catching up with the multicast stream.

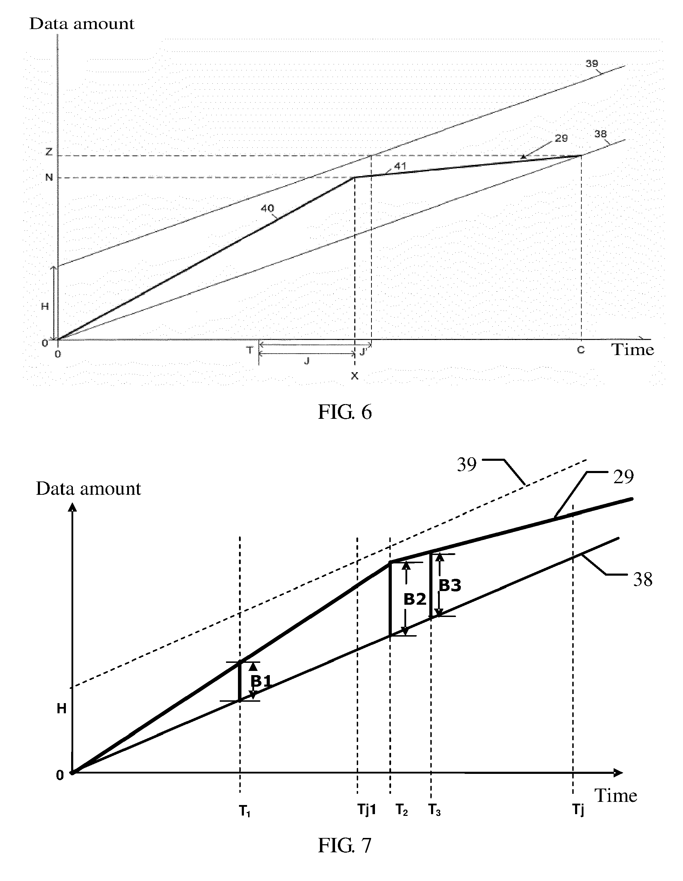

For ease of understanding, a specific coordinate system is used to indicate the condition of the stream services in the following. Referring to FIG. 6, a horizontal coordinate indicates the time, an ordinate indicates media data, an oblique line 39 indicates the multicast stream, an oblique line 29 formed by oblique lines 40 and 41 indicates the unicast stream sent by the server, and an oblique line 38 indicates the media data consumed by the receiving end.
Slopes of the oblique line 38 and the oblique line 39 represent multicast rates, and meanwhile are rates of the data consumed by the receiving end. The slopes of the oblique line 38 and the oblique line 39 are the same in a normal case.

H indicates an interval between the received unicast stream and the multicast stream at that time after the receiving end requests the channel switch, and may be equal to media data amount corresponding to a time shift between the unicast stream and the multicast stream.
T indicates the time of normally adding into the multicast group, C indicates a unicast end point, and Z indicates the unicast data amount delivered from the server to the receiving end in a normal case.
In step 4), in order to avoid a problem that the receiving end is too early or too late to be added into the original multicast group, the server needs to calculate in advance the time T of adding the receiving end into the multicast group, and then sends the time T to the receiving end. The server may change a sending speed according to a condition of a network or the receiving end during a process of sending the unicast stream, and may inform the receiving end of a new adding time during the change of the speed. The receiving end is added into the multicast group according to the newly received time.

However, such a notification mechanism is unreliable. The notification message sent by the server is possibly lost in the network, thereby causing a problem that the receiving end cannot be added into the multicast group at appropriate time.
If the loss of the notification message causes a problem that the time of adding the receiving end into the multicast group is delayed (that is, point T in FIG. 6 shifts to the right), the corresponding point J' may also shift to the right. Then, the unicast data amount of the server may be increased, and the serving time of the server is also lengthened (that is, point C shifts to the right), which increases a load of the server. If the time of adding into the multicast group is too late, for example, the point J' shifts to the right of the point C, the data buffered before the receiving end is added into the multicast group is exhausted, and the channel switch fails.

The embodiment of the present invention further provides a method for implementing stream services. In this method, the receiving end is not required to fully depend on the adding time informed by the server and can determine the appropriate adding time, thereby avoiding the problem caused by the loss of the notification message.
For ease of description, a stream service coordinate diagram according to the embodiment of the present invention is first described in the following. Referring to FIG. 7, specific definitions of parameters are the same as the specific definitions of the parameters in FIG. 6, which are not described in detail herein again.

During a channel switch process of this embodiment, the server may send the data at a reduced speed when the server will soon catch up with the multicast stream, and prepares to receive the multicast stream. That is to say, the time of adding into the multicast group should be close to speed reduction time.

Referring to FIG. 7, during a period of rapidly sending the unicast stream, since the speed of the unicast stream is greater than a data consumption speed, data amount buffered by the receiving end is gradually increased (that is, B1->B2 is gradually increased).
After a sending speed of the server is reduced at the time of T2, if the receiving end is still not added into the multicast group, since the speed of the unicast stream is less than the data consumption speed, the data amount buffered by the receiving end may be gradually reduced (that is, B1->B3 is gradually reduced).

If the speed of the server after the reduction of speed is equal to the data consumption speed, and the receiving end is still not added into the multicast group after the reduction of speed, the data amount buffered by the receiving end basically remains the same (that is, after the data amount is increased from B1 to B2, the data amount remains at B2).
It can be known from such a phenomenon that, in the case that the receiving end is not added into the multicast group, if it is detected at the time of T that the buffered data amount begins to reduce or remains the same after being increased to a certain degree, it indicates that the server has sent the data at a reduced speed, and the time of adding into the multicast group should be close to the time of T.

Generally, if the server reduces the speed when the server will soon catch up with the original multicast stream, data amount buffered in a receiving end should be close to a value of H. For example, when the speed is reduced at the time of T2 in FIG. 7, the data amount B2 buffered by the receiving end much close to H.
It can be seen from the above description that, if the server can send the interval H between the unicast stream and the original multicast stream to the receiving end, the receiving end may also determine, according to a change trend buffered by the receiving end, appropriate time of adding into the multicast group.

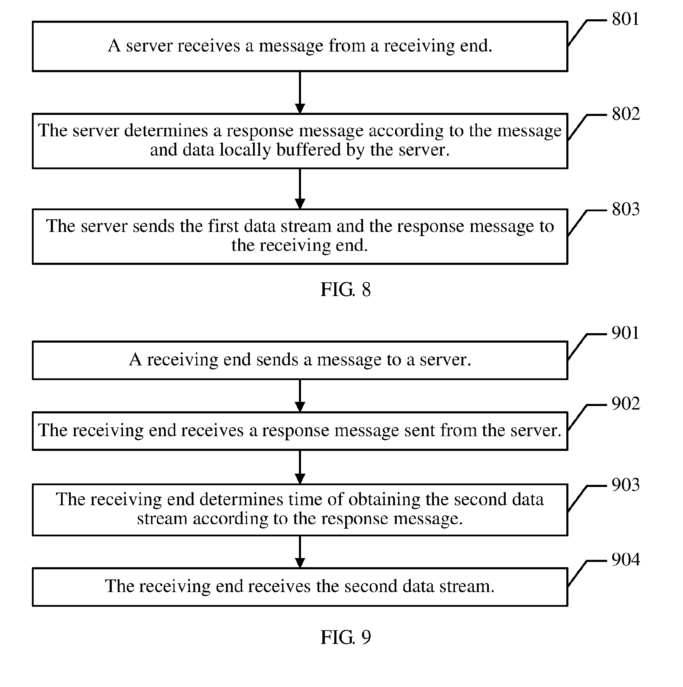

The method for implementing stream services according to the embodiment of the present invention is described in detail in the following. Referring to FIG. 8, another embodiment of a method for implementing stream services according to the present invention includes the following steps.
Step 801: A server receives a message from a receiving end.
The message in an actual application may be a channel switch request, a multicast switch request, an RAMS request, or request messages of other types, and the specific type is not limited herein. Step 802: The server determines a response message according to the message received from the receiving end.

In this embodiment, the response message may carry at least one of starting position information of a first data stream, an interval between the first data stream and a second data stream, latest data information of the second data stream, and rate change point information of the first data stream.

In this embodiment, the first data stream may be a unicast stream, and the second data stream may be an original multicast stream.

The interval (or offset information) between the first data stream and the second data stream may be data amount information such as the number of packets, a difference between SNs, data size, or time information. The latest data information of the second data stream may be latest SN information of the second data stream, and/or latest time information (for example, a TS) of the second data stream.

It should be noted that, in the actual application, step 801 may not be executed in the solution of this embodiment, that is, the server does not need to determine the response message only after receiving the message from the receiving end, and may directly determine the response message according to data information in a local buffer of the server, in which the response message may also include at least one of the starting position information of the first data stream, the interval between the first data stream and the second data stream, the latest data information of the second data stream, and the rate change point information of the first data stream.
Step 803: The server sends the first data stream and the response message to the receiving end, so that the receiving end determines, according to the response message, the time of obtaining the second data stream.

In the actual application, the server may send the data stream to the receiving end in a unicast stream type or in a multicast stream type. An encapsulation format of the data stream sent by the server is not limited, which may be directly copied original multicast data, original multicast data stream after re-encapsulation, a data packet encapsulated in a retransmission data packet format, or data of the original data stream with re-encapsulation or without re-encapsulation.
It should be noted that, the sending of the response message and the first data stream by the server has no strict sequence relation, that is, the server may first send the first data stream and then sends the response message, or the server first sends the response message and then sends the first data stream, or the server sends the response message and the first data stream at the same time.

After the server sends the first data stream in a period of time, the server may stop sending the first data stream, and the specific process is not limited herein.
In this embodiment, after the server sends the first data stream and the response message to the receiving end, the receiving end can determine, according to the response message and the data amount buffered in a receiving end, the time of obtaining the second data stream.
The method for implementing the stream services according to the embodiment of the present invention is described from a perspective of the server in the above, and is further described in the following from a perspective of the receiving end. Referring to FIG. 9, another embodiment of a method for implementing stream services according to the present invention includes the following steps.
Step 901: A receiving end sends a message to a server.
The message in an actual application may be a channel switch request, a multicast switch request, an RAMS request, or request messages of other types, and the specific type is not limited herein. Step 902: The receiving end receives a response message sent from the server.

After sending the message to the server, the receiving end may receive a first data stream and the response message from the server.

In this embodiment, the response message is determined by the server according to the message sent from the receiving end and data in a local buffer of the server, and includes at least one of starting position information of the first data stream, an interval between the first data stream and a second data stream, latest data information of the second data stream, and rate change point information of the first data stream.

The first data stream may be a unicast stream, and the second data stream may be an original multicast stream.

It should be noted that, in the actual application, step 901 may not be executed, that is, the receiving end does not need to send the message to the server, and may directly receive the response message from the server, in which the response message is determined by the server according to the data in a local buffer, and may also include at least one of the starting position information of the first data stream, the interval between the first data stream and the second data stream, the latest data information of the second data stream, and the rate change point information of the first data stream.
Step 903: The receiving end determines, according to the response message, time of obtaining the second data stream.

After receiving the response message, the receiving end detects the buffer information of the receiving end. In the embodiment of the present invention, the buffer information may be data amount of the first data stream buffered in a receiving end, or time information of the first data stream buffered in a receiving end, or a rate of the first data stream buffered in a receiving end. Data amount of the first data stream buffered in the receiving end may be the number of packets or the number of bytes in the buffer; the time information of the first data stream buffered in the receiving end may be time when the receiving end exhausts the data, or a difference value between time information of a latest data packet buffered in the buffer and time information of an earliest data packet, in which the time information of the data packet may be a TS of the data packet or time carried in a load of the data packet. As described in the above, the time of obtaining the second data stream should be close to the speed reduction time, so the receiving end may determine the time of obtaining the second data stream through the following manners. (1) The receiving end detects the buffer information of the receiving end.
When the buffer information begins to reduce or remain the same after being increased to the interval/offset information, it is determined that the current time is the time of obtaining the second data stream.

### (2) The receiving end detects the buffer information of the receiving end.

When the buffer information reaches a pre-configured threshold of the interval/offset information, it is determined that the current time is the time of obtaining the second data stream.
For example, in the embodiment of the present invention, H is used to indicate the interval/offset information (using time as a unit) and the pre-configured threshold may be set to (H-Δt).
a value of Δt may be 0.1 second (s), and is not limited herein.

### (3) The receiving end detects the buffer information of the receiving end.

The receiving end obtains the data amount buffered by the receiving end or the buffer time according to the rate change point information of the first data stream when the rate of the first data stream changes. When the buffer information reaches a pre-configured threshold of the data amount buffered by the receiving end or the buffer time when the rate of the first data stream changes, it is determined that the current time is the time of obtaining the second data stream.

For example, in the embodiment of the present invention, H' is used to indicate time information buffered by the receiving end when the rate of the first data stream changes, and the pre-configured threshold may be set to (H'-Δt), in which a value of Δt, for example, may be 0.1s, and is not limited herein.

The method for obtaining the data amount buffered by the receiving end or the buffer time according to the rate change point information of the first data stream when the rate of the first data stream changes includes the following manners. The data amount buffered by the receiving end or the buffer time when the rate of the first data stream changes is directly obtained from the rate change point information of the first data stream, or is calculated according to the rate change time of the first data stream, or is calculated according to a difference between the time when the rate of the first data stream starts to change and a media TS of the first data packet at a starting position of the first data stream, or is calculated according to an interval between the first data stream when the rate changes and the second data stream and the interval between the first data stream and the second data stream when the first data stream is started to be sent, or is calculated according to the reduced data amount or time at an interval between the first data stream and the second data stream when the rate of the first data stream changes. In the present invention, The method for obtaining the data amount buffered by the receiving end or the buffer time according to the rate change point information of the first data stream when the rate of the first data stream changes is described in the above, but is not limited to the above description.

### (4) The receiving end detects a speed of receiving the data.

T is equal to the interval/offset information divided by the speed of receiving the data.
When the receiving end passes through a period of time with a length T close to a pre-configured threshold, it is determined that the current time is the time of obtaining the second data stream.

It can be understood that, in this embodiment, several examples are used to describe a process of determining the time of obtaining the second data stream, and in the actual application, more determining manners may be used, which are not limited herein.

It should be noted that, in this embodiment, if the response message includes the interval/offset information between the first data stream and the second data stream, the receiving end may directly obtain the information from the response message; and if the response message merely includes the latest data information of the second data stream, the receiving end may also calculate the interval/offset information between the first data stream and the second data stream according to the latest data information of the second data stream and the starting position of the first data stream. The specific manners are not limited herein.
Step 904: The receiving end obtains the second data stream.

After determining the time of obtaining the second data stream, the receiving end can send a message for requesting the second data stream. If the second data stream is a multicast data stream, the receiving end sends a message for requesting adding into the multicast group to obtain the second data stream.

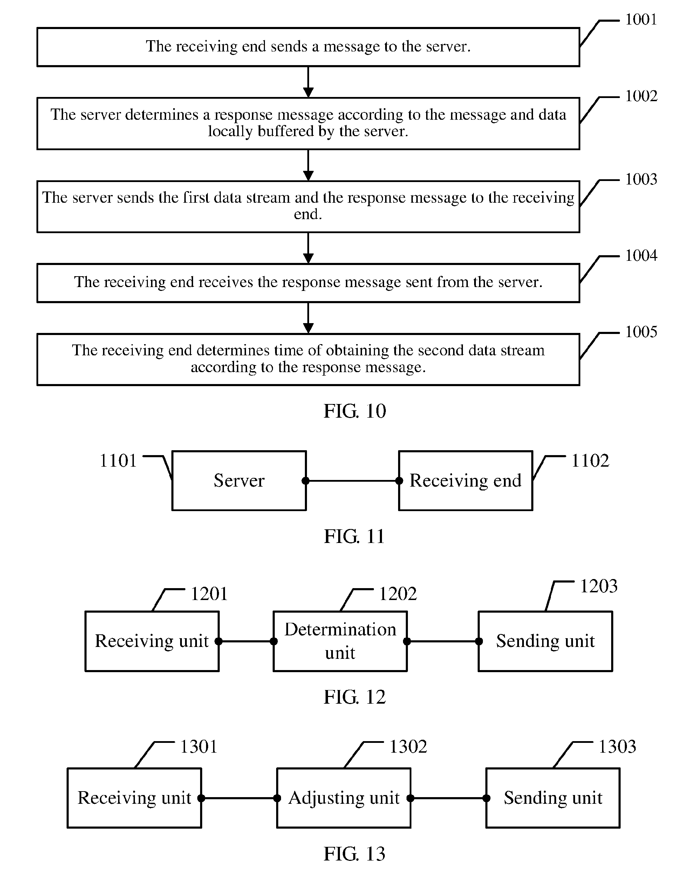

When the receiving end is added into the multicast group and begins to receive the original multicast stream, the receiving end may send a unicast stream stop message to the server to request the server to stop sending the unicast stream.
The method for implementing stream services according to the embodiment of the present invention is described in detail in the following from a perspective of interaction between the server and the receiving end. Referring to FIG. 10, another embodiment of a method for implementing stream services according to the present invention includes the following steps.
Step 1001: The receiving end sends a message to the server.
The message in an actual application may be a channel switch request, a multicast switch request, an RAMS request, or request messages of other types, and the specific type is not limited herein. Step 1002: The server determines a response message.
After receiving the message sent from the receiving end, the server can feed back the response message to the receiving end, in which the response message not only includes the content in an original response message, but also includes at least one of starting position information of the first data stream, an interval between the first data stream and the second data stream, latest data information of the second data stream, and rate change point information of the first data stream.
In this embodiment, the first data stream may be a unicast stream, and the second data stream may be an original multicast stream.

The interval (or offset information) between the first data stream and the second data stream may be data amount information such as the number of packets, a difference between SNs, data size, or time information. The latest data information of the second data stream may be latest SN information of the second data stream, and/or latest time information (for example, a TS) of the second data stream.

It should be noted that, the interval/offset information may be information without any processing, which may be, for example, time required for processing data between ta and tc as shown in FIG. 1 at a normal data processing speed, a difference between TSs of real-time transmission protocol packets corresponding to ta and tc as shown in FIG. 1, a difference between PTSs or DTSs in transmission streams in real-time transmission protocol packets corresponding to ta and tc as shown in FIG. 1, a difference between server system time corresponding to ta and tc, or a difference between Program Clock References (PCRs) corresponding to ta and tc, or may also be data after reduction or amplification of the above information, and is not limited herein.
It should be noted that, in the actual application, step 1001 may not be executed in the solution of this embodiment, that is, the server does not need to determine the response message only after receiving the message from the receiving end, and may directly determine the response message according to data information in a local buffer of the server, in which the response message may also include at least one of the starting position information of the first data stream, the interval between the first data stream and the second data stream, the latest data information of the second data stream, and the rate change point information of the first data stream.
Step 1003: The server sends the first data stream and the response message to the receiving end.
In the actual application, the server may send the data stream to the receiving end in a unicast stream type or in a multicast stream type. An encapsulation format of the data stream sent by the server is not limited, which may be directly copied original multicast data, original multicast data stream after re-encapsulation, a data packet encapsulated in a retransmission data packet format, or data of the original data stream with re-encapsulation or without re-encapsulation.

It should be noted that, the sending of the response message and the first data stream by the server has no strict sequence relation, that is, the server may first send the first data stream and then sends the response message, or the server first sends the response message and then sends the first data stream, or the server sends the response message and the first data stream at the same time. Step 1004: The receiving end receives the response message sent from the server.
In this embodiment, the response message is determined by the server according to the message sent from the receiving end and data in a local buffer of the server, and includes at least one of the starting position information of the first data stream, the interval between the first data stream and the second data stream, the latest data information of the second data stream, and the rate change point information of the first data stream.
Step 1005: The receiving end determines, according to the response message, time of obtaining the second data stream.

After receiving the response message, the receiving end may detect information of the received data. As described in the above, the time of obtaining the second data stream is close to the speed reduction time, so the receiving end may determine the time of obtaining the second data stream through the following manners.

### (1) The receiving end detects the buffer information of the receiving end.

When the buffer information begins to reduce or remain the same after being increased to the interval/offset information, it is determined that the current time is the time of obtaining the second data stream.

### (2) The receiving end detects the buffer information of the receiving end.

When the buffer information reaches a pre-configured threshold close to the interval/offset information, it is determined that the current time is the time of obtaining the second data stream. (3) The receiving end detects the buffer information of the receiving end.
When the buffer information reaches a pre-configured threshold close to the rate change point information of the first data stream, it is determined that the current time is the time of obtaining the second data stream. (4) The receiving end detects a speed of receiving the data.
T is equal to the interval/offset information divided by the speed of receiving the data.
When the receiving end passes through a period of time with a length T close to a pre-configured threshold, it is determined that the current time is the time of obtaining the second data stream.

It can be understood that, in this embodiment, several examples are used to describe a process of determining the time of obtaining the second data stream, and in the actual application, more determining manners may be used, which are not limited herein.
It should be noted that, in this embodiment, if the response message includes the interval/offset information between the first data stream and the second data stream, the receiving end may directly obtain the information from the response message; and if the response message merely includes the latest data information of the second data stream, the receiving end may also calculate the interval/offset information between the first data stream and the second data stream according to the latest data information of the second data stream and the starting position of the first data stream. The specific manners are not limited herein.

It should be noted that, when the server changes a sending speed of the first data stream, the server may also send an adding time calculated by the server to the receiving end through a notification message.

In this embodiment, if the receiving end receives the notification message, the receiving end may also determine, according to the adding time and the response message, the time of obtaining the second data stream. The specific manner may be as follows.

If the adding time in the notification message is earlier than the time of obtaining the second data stream calculated by the receiving end, and meanwhile the receiving end is not added into the multicast group, the receiving end is added into the multicast group at the adding time.

If the adding time in the notification message is later than the time of obtaining the second data stream calculated by the receiving end, and meanwhile the receiving end is not added into the multicast group, the receiving end is added into the multicast group at the time of obtaining the second data stream.

After the receiving end is added into the multicast group and begins to receive the original multicast stream, the receiving end may send a unicast stream stop message to the server to request the server to stop sending the unicast stream, or the server may automatically stop sending the unicast stream after sending the unicast stream in a period of time, which is not limited herein.
In this embodiment, when the receiving end does not receive from the server a notification indicating the adding time or receives a wrong notification, the receiving end delivers the information of this embodiment, so that the receiving end is added into the multicast group at appropriate time, thereby avoiding a problem that the receiving end cannot be added into the multicast group or is added into the multicast group at wrong time, and avoiding a problem that a double stream problem occurs in the receiving end or the unicast stream cannot catch up with the multicast stream.

A communication system according to an embodiment of the present invention is described in the following. Referring to FIG. 11, an embodiment of a communication system according to the present invention includes: a server 1101, and a receiving end 1102.
The server 1101 is configured to determine a response message, in which the response message includes at least one of starting position information of a first data stream, an interval between the first data stream and a second data stream, latest data information of the second data stream, and rate change point information of the first data stream, and send the first data stream and the response message to the receiving end 1102.

The receiving end 1102 is configured to receive the first data stream and the response message from the server 1101, and perform corresponding operation according to the response message.

The receiving end 1102 of this embodiment is specifically configured to perform data processing or determine time of obtaining the second data stream according to the response message.

The communication system of this embodiment may be specifically divided into the following conditions according to operation manners of the receiving end 1102.

### 1. The receiving end 1102 performs the data processing according to the response message.

Likewise, referring to FIG. 11, the communication system of this embodiment includes a server 1101 and a receiving end 1102.

The server 1101 is configured to receive a message from the receiving end 1102, in which the message includes data processing capability information of the receiving end 1102, determine a response message according to the data processing capability information and data information buffered by the server, in which the response message includes at least one or more of starting position information of a first data stream, an interval (or offset information) between the first data stream and a second data stream, latest data information of the second data stream, a lasting period of the first data stream, a speed of the first data stream, time required for catching up with the second data stream by the first data stream, rate change point information of the first data stream, data processing control information, or estimated first data amount buffered by the receiving end or buffer time, and is not limited to the above information; and send the first data stream and the response message to the receiving end 1102.

In this embodiment, a process of determining the response message by the server 1101 is the same as the process of determining the response message in step 202 in the embodiment as shown in FIG. 2(a), which is not described in detail herein again.
The receiving end 1102 is configured to receive the first data stream and the response message sent from the server 1101, and perform data processing according to the response message.

In this embodiment, the receiving end 1102 may be a client device for requesting stream services, such as a computer, a media player, or a cell phone, and the server 1101 for providing the receiving end with the stream services may be other network devices. The server is taken as an example in the embodiment of the present invention for description, but the device is not limited to the server.

In this embodiment, the receiving end 1102 obtains the interval (or offset information) between the first data stream and the second data stream according to the response message, and performs slow processing or rapid processing on the first data stream according to the interval (or offset information) between the first data stream and the second data stream and a buffer requirement. The specific time and manners of the slow processing or the rapid processing are the same as that in the description in the embodiment as shown in FIG. 2(a), which are not described in detail herein again.

In this embodiment, the data processing control information in the response message includes a rapid data processing parameter, a slow data processing parameter, or a delay data processing parameter.

The receiving end 1102 performs rapid data processing according to the rapid data processing parameter, or performs slow data processing according to the slow data processing parameter, or performs delay data processing according to the delay data processing parameter.
In this embodiment, the receiving end 1102 receives the second data stream at appropriate time. The appropriate time may be time during a receiving process of the first data stream or after the first data stream is over.

This embodiment may be applied to media services such as an IPTV, a network television, a mobile television, or a DTV, or may also be applied to other services related to a stream switch. For example, the receiving end 1102 first receives the first data stream (rapidly sent first data stream generally), and after a period of time, if payloads of the first data stream and the second data stream are about to be the same or the first data stream catches up with the second data stream, the receiving end 1102 receives the second data stream.

Likewise, referring to FIG. 11, another embodiment of a communication system according to the present invention includes a server 1101 and a receiving end 1102.

The server 1101 is configured to receive a message from the receiving end 1102, in which the message includes a data processing start condition of the receiving end 1102, determine a response message according to the data processing start condition and data information buffered by the server, in which the response message at least includes a data processing start condition suggested by the server, and send the first data stream and the response message to the receiving end 1102.

In this embodiment, when the server 1101 determines the response message, a default first buffer requirement and a second buffer requirement may be used. The server 1101 estimates data amount buffered by the receiving end and buffer time in a pre-configuration condition, and when the data amount or time is less than a pre-configured first buffer requirement, the server may suggest using a larger data processing start condition; and when the data amount or time is greater than a pre-configured second buffer requirement, the server may suggest using a smaller data processing start condition. For example, if the data processing start condition of the receiving end is 300 milliseconds (ms), the default first buffer requirement is 500 ms, and the server estimates that the buffer time of the receiving end is 400 ms when the first data stream is over under 100 ms start delay, the server may suggest that the start delay of the receiving end is 200 ms.
The pre-configuration condition of this embodiment may be a condition that the first data stream is over, and/or may be a condition that the first data stream catches up with the second data stream, and/or may be a certain data processing start condition, and/or may be a period of time.

The receiving end 1102 is configured to receive the first data stream and the response message sent from the server 1101, and perform data processing according to the response message. In this embodiment, the receiving end 1102 may be a client device for requesting stream services, such as a computer, a media player, or a cell phone, and the server 1101 for providing the receiving end with the stream services may be other network devices. The server 1101 is taken as an example in the embodiment of the present invention for description, but the device is not limited to the server.

In this embodiment, the receiving end 1102 executes delay data processing according to start delay suggested by the server.

In this embodiment, the receiving end 1102 receives the second data stream at appropriate time. The appropriate time may be time during a receiving process of the first data stream or after the first data stream is over.

This embodiment may be applied to media services such as an IPTV, a network television, a mobile television, or a DTV, or may also be applied to other services related to a stream switch. For example, the receiving end 1102 first receives the first data stream (rapidly sent first data stream generally), and after a period of time, if payloads of the first data stream and the second data stream are about to be the same or the first data stream catches up with the second data stream, the receiving end 1102 receives the second data stream.

Likewise, referring to FIG. 11, another embodiment of a communication system according to the present invention includes a server 1101 and a receiving end 1102.

The server 1101 is configured to determine a first message, in which the first message includes at least one or more of starting position information of a first data stream, an interval (or offset information) between the first data stream and a second data stream, latest data information of the second data stream, a lasting period of the first data stream, a speed of the first data stream, time required for catching up with the second data stream by the first data stream, rate change point information of the first data stream, data processing control information, or estimated first data amount buffered by the receiving end or buffer time, and is not limited to the above information; and send the first data stream and the response message to the receiving end 1102.
In this embodiment, a process of determining the first message by the server 1101 is the same as the process described in step 302 in the embodiment as shown in FIG. 3, which is not described in detail herein again.

The receiving end 1102 is configured to receive the first data stream and the first message sent from the server, and perform data processing according to the first message.
In this embodiment, the receiving end 1102 may be a client device for requesting stream services, such as a computer, a media player, or a cell phone, and the server 1101 for providing the receiving end with the stream services may be other network devices. The server 1101 is taken as an example in the embodiment of the present invention for description, but the device is not limited to the server.

In this embodiment, the receiving end 1102 obtains the interval (or offset information) between the first data stream and the second data stream according to the response message, and performs slow processing or rapid processing on the first data stream according to the interval (or offset information) between the first data stream and the second data stream and a buffer requirement. The specific time and manners of the slow processing or the rapid processing are the same as the description in the embodiment as shown in FIG. 3, which are not described in detail herein again.

In this embodiment, the data processing control information in the response message includes a rapid data processing parameter, a slow data processing parameter, or a delay data processing parameter.

The receiving end 1102 performs rapid data processing according to the rapid data processing parameter, or performs slow data processing according to the slow data processing parameter, or performs delay data processing according to the delay data processing parameter.
In this embodiment, the server 1101 is further configured to receive a message from the receiving end 1102.

It should be noted that, the message from the receiving end 1102 may further carry the buffer requirement, and the server 1101 determines, according to the buffer requirement, a start position of sending the first data stream, and determines the first message according to the start position of sending the first data stream.
In this embodiment, the receiving end 1102 receives the second data stream at appropriate time. The appropriate time may be time during a receiving process of the first data stream or after the first data stream is over.

This embodiment may be applied to media services such as an IPTV, a network television, a mobile television, or a DTV, or may also be applied to other services related to a stream switch. For example, the receiving end 1102 first receives the first data stream (rapidly sent first data stream generally), and after a period of time, if payloads of the first data stream and the second data stream are about to be the same or the first data stream catches up with the second data stream, the receiving end 1102 receives the second data stream.
In this embodiment, the server 1101 may send information such as the interval (or offset information) between the first data stream and the second data stream to the receiving end 1102, so that the receiving end 1102 can perform data processing according to the information, thereby improving data sending flexibility from the server 1101 to the receiving end 1102.
Secondly, when the receiving end 1102 performs slow data processing, data amount of the first data stream sent from the server may be reduced, thereby reducing a load of the server. When the receiving end 1102 performs rapid data processing, a time shift between users may be reduced, so that the content watched by different users is synchronous as much as possible, thereby improving user experience.

Likewise, referring to FIG. 11, another embodiment of a communication system according to the present invention includes a server 1101 and a receiving end 1102.
The server 1101 is configured to receive a message sent from the receiving end 1102, adjust or modify data in a first data stream, and send the adjusted or modified first data stream to the receiving end 1102.

In this embodiment, a process of adjusting or modifying the data in the first data stream by the server 1101 is the same as the process described in step 402 in the embodiment as shown in FIG. 4, which is not described in detail herein again.
The receiving end 1102 is configured to receive the adjusted or modified first data stream sent from the server 1101, and perform data processing on the adjusted first data stream.

In this embodiment, the receiving end 1102 may be a client device for requesting stream services, such as a computer, a media player, or a cell phone, and the server 1101 for providing the receiving end with the stream services may be other network devices. The server 1101 is taken as an example in the embodiment of the present invention for description, but the device is not limited to the server.

In this embodiment, the receiving end 1102 receives the second data stream at appropriate time. The appropriate time may be time during a receiving process of the first data stream or after the first data stream is over.

This embodiment may be applied to media services such as an IPTV, a network television, a mobile television, or a DTV, or may also be applied to other services related to a stream switch. For example, the receiving end 1102 first receives the first data stream (rapidly sent first data stream generally), and after a period of time, if payloads of the first data stream and the second data stream are about to be the same or the first data stream catches up with the second data stream, the receiving end 1102 receives the second data stream.

In this embodiment, the server 1101 may send a lengthened first data stream or a shortened first data stream to the receiving end 1102, thereby improving data sending flexibility from the server 1101 to the receiving end 1102. 2. The receiving end 1102 determines, according to the response message, time of obtaining the second data stream.

Likewise, referring to FIG. 11, a communication system of this embodiment includes a server 1101 and a receiving end 1102.

The server 1101 is configured to receive a message from the receiving end 1102, and determine a response message according to the message and data in a local buffer of the server, in which the response message includes at least one of starting position information of a first data stream, an interval between the first data stream and a second data stream, latest data information of the second data stream, and rate change point information of the first data stream, and send the first data stream and the response message to the receiving end 1102.

The receiving end 1102 is configured to send a message to the server 1101, receive the response message and the first data stream sent from the server 1101, and determine, according to the response message, the time of obtaining the second data stream.
In this embodiment, the server 1101 may be further configured to send a notification message including an adding time to the receiving end when adjusting a sending speed of the first data stream.

The receiving end 1102 is further configured to determine, according to the adding time and the response message, the time of obtaining the second data stream.
The receiving end 1102 of this embodiment is further configured to calculate interval/offset information between the first data stream and the second data stream according to the latest data information of the second data stream and a starting position of the first data stream.

For ease of understanding, the communication system in the embodiment of the present invention is described in the following through a specific application scenario.
When the receiving end 1102 needs to perform a channel switch, the receiving end 1102 may send a channel switch request to the server 1101.

When the server 1101 receives the channel switch request sent from the receiving end 1102, the server 1101 may feed back a channel switch response to the receiving end, in which the channel switch response not only includes the content in an original channel switch response, but also includes at least one of the interval/offset information between the first data stream and the second data stream, and the latest data information of the second data stream.
In this embodiment, the first data stream may be a unicast stream, and the second data stream may be an original multicast stream.

The interval/offset information of this embodiment may be the same as the interval/offset information as described in the above method embodiment, which is not described in detail herein again.

The server 1101 sends the first data stream and the channel switch response to the receiving end 1102.

In the actual application, the server 1101 may send the data stream to the receiving end 1102 in a unicast stream type or in a multicast stream type. An encapsulation format of the data stream sent by the server 1101 is not limited, which may be directly copied original multicast data, original multicast data stream after re-encapsulation, a data packet encapsulated in a retransmission data packet format, or data of the original data stream with re-encapsulation or without re-encapsulation.

It should be noted that, the sending of the response message and the first data stream from the server 1101 to the receiving end 1102 has no strict sequence relation, that is, the server may first send the first data stream and then sends the response message, or the server first sends the response message and then sends the first data stream, or the server sends the response message and the first data stream at the same time.

After the receiving end 1102 sends the channel switch request to the server 1101, the receiving end 1102 may receive the first data stream and the channel switch response from the server 1101.

After receiving the channel switch response, the receiving end 1102 may detect buffer information of the receiving end to determine the time of obtaining the second data stream. The specific determination process is the same as the determination process as described in the above method embodiment, which is not described in detail herein again.

It should be noted that, in this embodiment, if the channel switch response includes the interval/offset information between the first data stream and the second data stream, the receiving end 1102 may directly obtain the information from the channel switch response; and if the channel switch response merely includes the latest data information of the second data stream, the receiving end 1102 may also calculate the interval/offset information between the first data stream and the second data stream according to the latest data information of the second data stream and the starting position of the first data stream. The specific manners are not limited herein.
When the server 1101 changes the sending speed of the first data stream, the server 1101 may also send the adding time calculated by the server 1101 to the receiving end 1102 through a notification message.

In this embodiment, if the receiving end 1102 receives the notification message, the receiving end 1102 determines, according to the adding time and the response message, the time of obtaining the second data stream, and the specific determination process is as described in the above method embodiment.

After the receiving end 1102 is added into a multicast group and begins to receive the original multicast stream, the receiving end 1102 may send a unicast stream stop message to the server 1101 to request the server 1101 to stop sending the unicast stream, or the server 1101 may automatically stop sending the unicast stream after sending the unicast stream in a period of time, which is not limited herein.

In this embodiment, when the receiving end 1102 does not receive a notification indicating the adding time from the server or receives a wrong notification, the receiving end 1102 delivers the information of this embodiment, so that the receiving end may be added into the multicast group at appropriate time, thereby avoiding a problem that the receiving end 1102 cannot be added into the multicast group or is added into the multicast group at wrong time, and further avoiding a problem that a double stream problem occurs in the receiving end 1102 or the unicast stream cannot catch up with the multicast stream.

A server embodiment in the embodiment of the present invention is described in the following. Referring to FIG. 12, an embodiment of a server according to the present invention includes: a receiving unit 1201, a determination unit 1202, and a sending unit 1203.
The receiving unit 1201 is configured to receive a message from a receiving end, in which the message includes data processing capability information of the receiving end.
The determination unit 1202 is configured to determine a response message according to the data processing capability information and data information buffered by the server, in which the response message includes at least one or more of starting position information of a first data stream, an interval (or offset information) between the first data stream and a second data stream, latest data information of the second data stream, a lasting period of the first data stream, a speed of the first data stream, time required for catching up with the second data stream by the first data stream, rate change point information of the first data stream, data processing control information, or estimated first data amount buffered by the receiving end or buffer time, and are not limited to the above information.

In this embodiment, a process of determining the response message by the determination unit 1202 is the same as the process of determining the response message in step 202 in the embodiment as shown in FIG. 2(a), which is not described in detail herein again.

The sending unit 1203 is configured to send the first data stream and the response message to the receiving end, so that the receiving end performs data processing according to the response message.

In this embodiment, the data processing capability information includes information indicating whether the receiving end supports rapid/slow data processing, or a degree of supporting rapid/slow data processing.

When the receiving end supports the slow data processing, the determination unit 1202 determines the response message according to the supported slow data processing capability information.

When the receiving end supports the rapid data processing, the determination unit 1202 determines the response message according to the supported rapid data processing capability information.

Likewise, referring to FIG. 12, another embodiment of a server according to the present invention includes a receiving unit 1201, a determination unit 1202, and a sending unit 1203.

The receiving unit 1201 is configured to receive a message from a receiving end, in which the message includes data processing start condition of the receiving end.

The determination unit 1202 is configured to determine a response message according to the data processing start condition and data information buffered by the server, in which the response message includes a data processing start condition suggested by the server.
In this embodiment, when the determination unit 1202 determines the response message, a default first buffer requirement and a second buffer requirement may be used. The determination unit 1202 estimates data amount buffered by the receiving end and buffer time in a pre-configuration condition, and when the data amount or the time is less than a pre-configured first buffer requirement, the server may suggest using a larger data processing start condition; and when the data amount or time is greater than a pre-configured second buffer requirement, the server may suggest using a smaller data processing start condition. For example, if the data processing start condition of the receiving end is 300 ms, the default first buffer requirement is 500 ms, and the server estimates that the buffer time of the receiving end is 400 ms when the first data stream is over under 100 ms start delay, the server may suggest that the start delay of the receiving end is 200 ms.

The pre-configuration condition of this embodiment may be a condition that the first data stream is over, and/or may be a condition that the first data stream catches up with the second data stream, and/or may be a certain data processing start condition, and/or may be a period of time. The sending unit 1203 is configured to send the first data stream and the response message to the receiving end, so that the receiving end performs data processing according to the response message.

Likewise, referring to FIG. 12, another embodiment of a server according to the present invention includes a determination unit 1202, and a sending unit 1203.

The determination unit 1202 is configured to determine a first message, in which the first message includes at least one or more of starting position information of a first data stream, an interval (or offset information) between the first data stream and a second data stream, latest data information of the second data stream, a lasting period of the first data stream, a speed of the first data stream, time required for catching up with the second data stream by the first data stream, rate change point information of the first data stream, data processing control information, or estimated first data amount buffered by the receiving end or buffer time, and is not limited to the above information.

In this embodiment, a process of determining the first message by the determination unit 1202 is the same as the process described in step 302 in the embodiment as shown in FIG. 3, which is not described in detail herein again.

The sending unit 1203 is configured to send the first data stream and the first message to the receiving end, so that the receiving end performs data processing according to the first message. The server of this embodiment may further include a receiving unit 1201.
The receiving unit 1201 is configured to receive a message from the receiving end, so that the determination unit 1202 determines the first message according to the message.

In this embodiment, the message received by the receiving unit 1201 includes a buffer requirement. Then, the determination unit 1202 is further configured to determine, according to the buffer requirement included in the message, a start position of sending the first data stream, and determine the first message according to the start position of sending the first data stream.

In this embodiment, the sending unit 1203 may send information such as the interval (or offset information) between the first data stream and the second data stream to the receiving end, so that the receiving end can perform data processing according to the information, thereby improving the data sending flexibility from the server to the receiving end.

Referring to FIG. 13, another embodiment of a server according to the present invention includes a receiving unit 1301, and an adjusting unit 1302.
The receiving unit 1301 is configured to receive a message from a receiving end.
The adjusting unit 1302 is configured to adjust or modify data in a first data stream.

In this embodiment, a process of adjusting or modifying the data in the first data stream by the adjusting unit 1302 is the same as the process described in step 402 in the embodiment as shown in FIG. 4, which is not described in detail herein again.
The sending unit 1303 is configured to send the adjusted or modified first data stream to the receiving end, so that the receiving end performs data processing on the adjusted first data stream.
In this embodiment, the adjusting unit 1302 may lengthen or shorten the first data stream according to data processing capability information provided by the receiving end and data information buffered by the server, thereby improving data sending flexibility from the server to the receiving end.

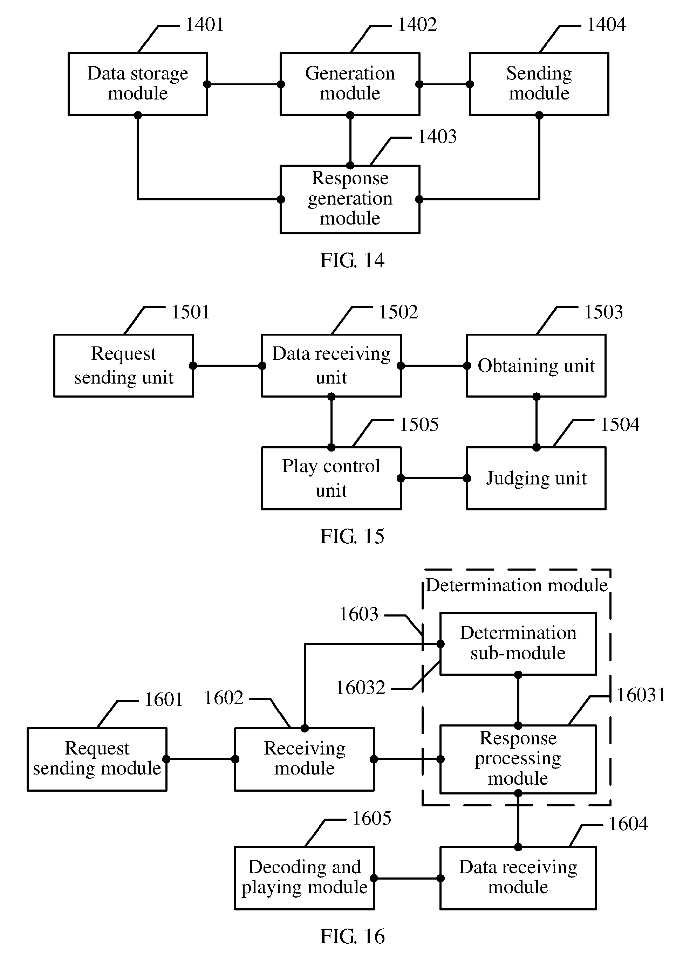

A server embodiment in the embodiment of the present invention is described in the following. Referring to FIG. 14, an embodiment of a server according to the present invention includes: a data storage module 1401, a generation module 1402, a response generation module 1403, and a sending module 1404.

The data storage module 1401 is configured to store data of at least one data stream.

The generation module 1402 is configured to analyze data of a second data stream stored by the data storage module 1401 to generate a first data stream.

The response generation module 1403 is configured to determine a response message, in which the response message includes at least one of starting position information of the first data stream, an interval between the first data stream and the second data stream, latest data information of the second data stream, and rate change point information of the first data stream.
The sending module 1404 is configured to send the response message and the first data stream to the receiving end.

In this embodiment, the response generation module 1403 may determine the response message according to a message sent from the receiving end and data stored by the data storage module 1401, in which the response message includes at least one of the starting position information of the first data stream, the interval between the first data stream and the second data stream, the latest data information of the second data stream, and the rate change point information of the first data stream.

The server of this embodiment may further include a message receiving module 1400, configured to receive a message from the receiving end, in which the received message includes data processing capability information of the receiving end.

The response generation module 1403 determines the response message according to the data processing capability information.
For ease of understanding, the server in the embodiment of the present invention is described in the following through a specific application scenario.

When the receiving end needs to perform a channel switch, the server may receive a channel switch request sent from the receiving end.

After receiving the channel switch request sent from the receiving end, the response generation module 1403 can determine a channel switch response, in which the channel switch response not only includes the content in the original channel switch response, but also includes at least one of the starting position information of the first data stream, the interval between the first data stream and the second data stream, the latest data information of the second data stream, and the rate change point information of the first data stream.

The sending module 1404 sends the first data stream and the channel switch response to the receiving end, so that the receiving end obtains, according to the channel switch response, time of adding into a multicast group.

In the actual application, the sending module 1404 may send the data stream to the receiving end in a unicast stream type or in a multicast stream type. An encapsulation format of the data stream sent by the sending module 1404 is not limited, which may be directly copied original multicast data, an original multicast data stream after re-encapsulation, a data packet encapsulated in a retransmission data packet format, or data of the original data stream with re-encapsulation or without re-encapsulation.

In this embodiment, after the server sends the first data stream and the channel switch response to the receiving end, the receiving end may determine, according to the channel switch response and data amount buffered in the receiving end, the time of obtaining the second data stream, so when the receiving end does not receive a notification indicating an adding time from the server or receives a wrong notification, the receiving end delivers the information of this embodiment, so that the receiving end is added into the multicast group at appropriate time, thereby avoiding a problem that the receiving end cannot be added into the multicast group or is added into the multicast group at wrong time, and further avoiding a problem that a double stream problem occurs in the receiving end or the unicast stream cannot catch up with the multicast stream.

A network device embodiment according to the embodiment of the present invention is described in the following. Referring to FIG. 15, an embodiment of a network device according to the present invention includes: a data receiving unit 1502, and a data processing control unit 1505. The data receiving unit 1502 is configured to receive a first data stream and a message sent from a server, in which the message includes at least one or more of starting position information of the first data stream, an interval (or offset information) between the first data stream and a second data stream, latest data information of the second data stream, a lasting period of the first data stream, a speed of the first data stream, time required for catching up with the second data stream by the first data stream, rate change point information of the first data stream, data processing control information, or estimated first data amount buffered by the receiving end or buffer time, and is not limited to the above information.

The data processing control unit 1505 is configured to perform data processing according to the message received by the data receiving unit 1502.
It should be noted that, the message received by the data receiving unit 1502 of this embodiment may be the response message described in the embodiment as shown in FIG. 2(a), or the first message described in the embodiment as shown in FIG. 3, which is not limited herein.

The network device of this embodiment may further include a request sending unit 1501. The request sending unit 1501 is configured to send a message to the server, in which the message includes data processing capability information or a buffer requirement of the network device.

In this embodiment, the data processing control information in the response message includes a rapid data processing parameter, a slow data processing parameter, or a delay data processing parameter.

The data processing control unit 1505 performs rapid data processing according to the rapid data processing parameter, performs slow data processing according to the slow data processing parameter, or performs delay data processing according to the delay data processing parameter.

The network device of this embodiment may further include an obtaining unit 1503, and a judging unit 1504. The obtaining unit 1503 is configured to obtain the interval (or offset information) between the first data stream and the second data stream according to the response message, and determine data amount or time corresponding to a real interval according to the interval (or offset information) between the first data stream and the second data stream or the estimated first data amount buffered by the receiving end or the buffer time.

The judging unit 1504 is configured to judge whether the data amount or time corresponding to the real interval meets a pre-configured buffer requirement.

The definition of the real interval of this embodiment is the same as the definition of the real interval described in step 204 in the embodiment as shown in FIG. 2(a), which is not described in detail herein again.

The data processing control unit 1505 is further configured to perform slow processing or rapid processing on the first data stream according to the interval between the first data stream and the second data stream, and the buffer requirement.

The data processing control unit 1505 of this embodiment may specifically perform slow processing on the first data stream when the data amount or time corresponding to the real interval is less than a pre-configured first buffer requirement, and perform rapid processing on the first data stream when the data amount or time corresponding to the real interval is greater than a pre-configured second buffer requirement.

The definition of the first buffer requirement and the second buffer requirement in this embodiment is the same as the definition of the first buffer requirement and the second buffer requirement described in the embodiment shown in FIG. 2(a), which is not described herein again. In this embodiment, the receiving end receives the second data stream at appropriate time. The appropriate time may be time during a receiving process of the first data stream or after the first data stream is over.

This embodiment may be applied to media services such as an IPTV, a network television, a mobile television, or a DTV, or may also be applied to other services related to a stream switch. For example, the receiving end first receives the first data stream (rapidly sent first data stream generally), and after a period of time, if payloads of the first data stream and the second data stream are about to be the same or the first data stream catches up with the second data stream, the receiving end receives the second data stream.

The network device of this embodiment may be a client device for requesting stream services, such as a computer, a media player or a cell phone.

A network device embodiment according to the present invention is described in the following. Referring to FIG. 16, an embodiment of a network device according to the present invention includes: a request sending module 1601, a receiving module 1602, a determination module 1603, a data receiving module 1604, and a decoding and playing module 1605.

The request sending module 1601 is configured to send a message to a server.
The receiving module 1602 is configured to receive a response message sent from the server, in which the response message includes at least one of starting position information of a first data stream, an interval between the first data stream and a second data stream, latest data information of the second data stream, and rate change point information of the first data stream.
In this embodiment, the rate change point information of the first data stream may include the time when the rate of the first data stream starts to change, or an interval between the first data stream when the rate changes and the second data stream, or data amount buffered in a receiving end or buffer time when the rate of the first data stream changes, or reduced data amount or time in the interval between the first data stream and the second data stream when the rate of the first data stream changes.

The determination module 1603 is configured to obtain interval information according to the response message, and determine, according to the interval information, time of obtaining the second data stream.

The data receiving module 1604 is configured to receive the first data stream sent from the server.

The decoding and playing module 1605 is configured to decode and play the received first data stream.

The determination module 1603 of this embodiment may further include a response processing module 16031 and a determination sub-unit 16032.

The response processing module 16031 is configured to obtain the interval between the first data stream and the second data stream in the response message; or determine the interval between the first data stream and the second data stream according to the latest data information of the second data stream and a starting position of the first data stream; or calculate the interval between the first data stream and the second data stream according to the rate change point information of the first data stream in the response message, and the starting position of the first data stream.

The determination sub-module 16032 is configured to determine time of obtaining the second data stream, according to the interval information determined by the response processing module 16031 and the buffer information.
In this embodiment, the receiving module 1602 may be further configured to receive a notification message sent from the server, in which the notification message carries an adding time.
The determination module 1603 is further configured to determine, according to the adding time and the response message, the time of obtaining the second data stream.

It should be noted that, in this embodiment, the request sending module 1601, and the decoding and playing module 1605 are optional modules.

For ease of understanding, the network device in the embodiment of the present invention is described in the following through a specific application scenario.

When the receiving end needs to perform a channel switch, the request sending module 1601 may send a channel switch request to the server.

After the request sending module 1601 sends the channel switch request to the server, the receiving module 1602 may receive the first data stream and a channel switch response from the server.

In this embodiment, the channel switch response is determined by the server according to the channel switch request and data in a local buffer of the server, in which the channel switch response includes at least one of the starting position information of the first data stream, the interval between the first data stream and the second data stream, the latest data information of the second data stream, and the rate change point information of the first data stream.
After a receiving end of the receiving module 1602 receives the channel switch response, the determination module 1603 may detect information of the data received by the determination module 1603, and may determine the time of obtaining the second data stream through the following manners.

### (1) The receiving end detects the buffer information of the receiving end.

When the buffer information begins to reduce or remain the same after being increased to the interval/offset information, it is determined that the current time is the time of obtaining the second data stream.

### (2) The receiving end detects the buffer information of the receiving end.

When the buffer information reaches a pre-configured threshold close to the interval/offset information, it is determined that the current time is the time of obtaining the second data stream.

### (3) The receiving end detects the buffer information of the receiving end.

When the buffer information reaches a pre-configured threshold close to the rate change point information of the first data stream, it is determined that the current time is the time of obtaining the second data stream.

### (4) The receiving end detects a speed of receiving the data.

T is equal to the interval/offset information divided by the speed of receiving the data.
When the receiving end passes through a period of time with a length T close to a pre-configured threshold, it is determined that the current time is the time of obtaining the second data stream.

It can be understood that, in this embodiment, several examples are used to describe a process of determining the time of obtaining the second data stream, and in the actual application, more determining manners may be used, which are not limited thereto.

It should be noted that, in this embodiment, if the channel switch response includes interval/offset information between the first data stream and the second data stream, the response processing module 1606 may directly obtain the information from the channel switch response; and if the channel switch response merely includes the latest data information of the second data stream, the response processing module 1606 may also calculate the interval/offset information between the first data stream and the second data stream according to the latest data information of the second data stream and the starting position of the first data stream. The specific manners are not limited herein.

When the server changes a sending speed of the first data stream, the server may also send the adding time calculated by the server to the receiving end through a notification message. In this embodiment, if the receiving module 1602 receives the notification message, the determination module 1603 may obtain the interval information according to the adding time and the response message, and determines, according to the interval information, the time of obtaining the second data stream.

After the receiving end is added into the multicast group, the receiving end may begin to receive an original multicast stream.

In this embodiment, when the receiving end does not receive a notification indicating the adding time from the server or receives a wrong notification, the receiving end delivers the information of this embodiment, so that the receiving end is added into the multicast group at appropriate time, thereby avoiding a problem that the receiving end cannot be added into the multicast group or is added into the multicast group at wrong time, and avoiding a problem that a double stream problem occurs in the receiving end or the unicast stream cannot catch up with the multicast stream.

Those of ordinary skill in the art should understand that all or a part of the steps of the method according to the embodiments of the present invention may be implemented by a program instructing relevant hardware. The program may be stored in a computer readable storage medium. The storage medium may be a ROM, a magnetic disk, or an optical disk.

The method and the communication system for implementing stream services, and the relevant device provided by the present invention are described in detail above. Persons of ordinary skill in the art can make variations and modifications to the present invention in terms of the specific implementations and application scopes according to the ideas of the present invention. Therefore, the specification shall not be construed as a limit to the present invention.

## Claims

1. A method for implementing stream services, comprising:
determining, by a server, a response message, wherein the response message comprises: at least one of an interval between a first data stream and a second data stream, latest data information of the second data stream, and rate change point information of the first data stream; and
sending, by the server, the first data stream and the response message to a receiving end, to enable the receiving end to perform corresponding operation according to the response message.

2. The method according to claim 1, wherein the rate change point information of the first data stream comprises:
time when a rate of the first data stream starts to change, an interval between the first data stream when the rate changes and the second data stream, data amount buffered by the receiving end or buffer time when the rate of the first data stream changes, or reduced data amount or time in the interval between the first data stream and the second data stream when the rate of the first data stream changes.

3. The method according to claim 1, wherein before the determining, by the server, the response message, the method further comprises:
receiving, by the server, a message from the receiving end, wherein the message from the receiving end comprises data processing capability information of the receiving end; and
the determining, by the server, the response message comprises:
determining, by the server, the response message according to the data processing capability information.

4. The method according to any one of claims 1 to 3, wherein the enabling the receiving end to perform the corresponding operation according to the response message comprises: enabling the receiving end to obtain interval information according to the response message, and perform data processing according to the interval information.

5. The method according to claim 1, wherein before the determining, by the server, the response message, the method further comprises:
receiving, by the server, a message from the receiving end; and
the determining, by the server, the response message comprises: determining, by the server, the response message according to the message from the receiving end and locally stored data.

6. The method according to claim 1 or 5, wherein the enabling the receiving end to perform the corresponding operation according to the response message comprises: enabling the receiving end to obtain interval information according to the response message, and determine time of obtaining the second data stream according to the interval information.

7. A method for implementing stream services, comprising:
receiving, by a receiving end, a response message from a server, wherein the response message comprises: at least one of an interval between a first data stream and a second data stream, latest data information of the second data stream, and rate change point information of the first data stream; and
performing, by the receiving end, corresponding operation according to the response message.

8. The method according to claim 7, wherein the rate change point information of the first data stream comprises:
time when a rate of the first data stream starts to change, an interval between the first data stream when the rate changes and the second data stream, data amount buffered by the receiving end or buffer time when the rate of the first data stream changes, or reduced data amount or time in the interval between the first data stream and the second data stream when the rate of the first data stream changes.

9. The method according to claim 7, wherein before the receiving, by the receiving end, the response message from the server, the method further comprises:
sending, by the receiving end, a message to the server; wherein
the response message is determined by the server according to the message sent from the receiving end and data locally buffered by the server.

10. The method according to claim 7, wherein before the performing, by the receiving end, the corresponding operation according to the response message, the method further comprises:
determining, by the receiving end, interval information according to the response message, and determining time of obtaining the second data stream according to the interval information and buffer information.

11. The method according to claim 10, wherein before the determining, by the receiving end, the time of obtaining the second data stream according to the interval information and the buffer information, the method further comprises:
detecting, by the receiving end, the buffer information of the receiving end; and
the determining, by the receiving end, the time of obtaining the second data stream according to the interval information and the buffer information comprises:
when the buffer information begins to reduce or remain the same after being increased to the interval, determining to begin to obtain the second data stream; or
when the buffer information reaches a pre-configured threshold close to the interval, determining to begin to obtain the second data stream; or
when the buffer information reaches a pre-configured threshold close to the rate change point information of the first data stream, determining to begin to obtain the second data stream.

12. The method according to claim 10, wherein the determining, by the receiving end, the interval information according to the response message comprises:
obtaining, by the receiving end, the interval between the first data stream and the second data stream in the response message; or
calculating, by the receiving end, the interval between the first data stream and the second data stream according to the latest data information of the second data stream and a starting position of the first data stream in the response message; or
calculating, by the receiving end, the interval between the first data stream and the second data stream according to the rate change point information of the first data stream and a starting position of the first data stream in the response message.

13. A method for implementing stream services, comprising:
receiving, by a server, a message from a receiving end, wherein the message comprises data processing capability information of the receiving end;
determining, by the server, a response message according to the data processing capability information, wherein the response message comprises at least one of an interval between a first data stream and a second data stream, latest data information of the second data stream, time required for catching up with the second data stream by the first data stream, and rate change point information of the first data stream; and
sending, by the server, the first data stream and the response message to the receiving end, to enable the receiving end to perform data processing according to the response message.

14. The method according to claim 13, wherein the data processing capability information comprises information indicating whether the receiving end supports rapid data processing or slow data processing, or a degree of supporting the rapid data processing or the slow data processing;
the determining, by the server, the response message according to the data processing capability information comprises:
when the receiving end supports the slow data processing, determining, by the server, the response message according to the supported slow data processing capability information;
or,
when the receiving end supports the rapid data processing, determining, by the server, the response message according to the supported rapid data processing capability information.

15. The method according to claim 13 or 14, wherein data processing control information in the response message comprises:
a rapid data processing parameter, a slow data processing parameter, or a delay data processing parameter; and
a first data amount or time comprises:
data amount buffered by the receiving end or buffer time when the first data stream is over or after the first data stream is over, data amount buffered by the receiving end or buffer time when the first data stream catches up with the second data stream or after the first data stream catches up with the second data stream, data amount buffered by the receiving end or buffer time in a certain data processing start condition, or data amount buffered by the receiving end or buffer time after a period of time.

16. The method according to claim 15, wherein the performing, by the receiving end, the data processing according to the response message comprises:
performing, by the receiving end, rapid data processing according to the rapid data processing parameter, or performing slow data processing according to the slow data processing parameter, or performing delay data processing according to the delay data processing parameter.

17. The method according to claim 13 or 14, wherein after the sending, by the server, the first data stream and the response message to the receiving end, the method further comprises:
obtaining, by the receiving end, the interval between the first data stream and the second data stream according to the response message; and
performing, by the receiving end, slow processing or rapid processing on the first data stream according to the interval between the first data stream and the second data stream and a buffer requirement.

18. The method according to claim 17, wherein the performing, by the receiving end, the slow processing or the rapid processing on the first data stream according to the interval between the first data stream and the second data stream and the buffer requirement comprises:
determining, by the receiving end, data amount or time corresponding to a real interval according to the interval between the first data stream and the second data stream or estimated first data amount buffered by the receiving end or buffer time;
when the data amount or time corresponding to the real interval is less than a pre-configured first buffer requirement, performing the slow processing on the first data stream; and
when the data amount or time corresponding to the real interval is greater than a pre-configured second buffer requirement, performing the rapid processing on the first data stream.

19. The method according to claim 17, wherein the obtaining, by the receiving end, the interval between the first data stream and the second data stream according to the response message comprises:
obtaining, by the receiving end, the interval between the first data stream and the second data stream from the response message;
or,
calculating, by the receiving end, the interval between the first data stream and the second data stream according to at least one of the latest data information of the second data stream, the time required for catching up with the second data stream by the first data stream, and the rate change point information of the first data stream.

20. A method for implementing stream services, comprising:
determining, by a server, a first message, wherein the first message comprises: at least one of an interval between a first data stream and a second data stream, latest data information of the second data stream, time required for catching up with the second data stream by the first data stream, and rate change point information of the first data stream; and
sending, by the server, the first data stream and the first message to a receiving end, to enable the receiving end to perform data processing according to the first message.

21. The method according to claim 20, wherein the rate change point information of the first data stream comprises:
time when a rate of the first data stream starts to change, an interval between the first data stream when the rate changes and the second data stream, data amount buffered by the receiving end or buffer time when the rate of the first data stream changes, or reduced data amount or time in the interval between the first data stream and the second data stream when the rate of the first data stream changes.

22. The method according to claim 20 or 21, wherein after the sending, by the server, the first data stream and the first message to the receiving end, the method further comprises:
obtaining, by the receiving end, the interval between the first data stream and the second data stream according to the first message; and
performing, by the receiving end, slow processing or rapid processing on the first data stream according to the interval between the first data stream and the second data stream and a buffer requirement.

23. The method according to claim 22, wherein the performing, by the receiving end, the slow processing or the rapid processing on the first data stream according to the interval between the first data stream and the second data stream and the buffer requirement comprises:
determining, by the receiving end, data amount or time corresponding to a real interval according to the interval between the first data stream and the second data stream or an estimated first data amount buffered by the receiving end or buffer time;
when the data amount or time corresponding to the real interval is less than a pre-configured first buffer requirement, performing the slow processing on the first data stream; and
when the data amount or time corresponding to the real interval is greater than a pre-configured second buffer requirement, performing the rapid processing on the first data stream.

24. The method according to claim 22, wherein the obtaining, by the receiving end, the interval between the first data stream and the second data stream according to the first message comprises:
obtaining, by the receiving end, the interval between the first data stream and the second data stream from the first message;
or,
calculating, by the receiving end, the interval between the first data stream and the second data stream according to at least one of the latest data information of the second data stream, the time required for catching up with the second data stream by the first data stream, and the rate change point information of the first data stream.

25. The method according to claim 20 or 21, wherein before the determining the first message, the method further comprises:
receiving, by the server, a message from the receiving end; and
the determining the first message comprises:
determining, by the server, the first message according to the message from the receiving end.

26. The method according to claim 25, wherein the message from the receiving end comprises the buffer requirement;
the determining, by the server, the first message comprises:
determining, by the server, a start position of sending the first data stream according to the buffer requirement comprised in the message from the receiving end; and
determining the first message according to the start position of sending the first data stream.

27. A communication system, comprising:
a server, configured to determine a response message, wherein the response message comprises at least one of an interval between a first data stream and a second data stream, latest data information of the second data stream, and rate change point information of the first data stream; and send the first data stream and the response message to a receiving end; and
the receiving end, configured to receive the first data stream and the response message from the server, and perform corresponding operation according to the response message.

28. The communication system according to claim 27, wherein the receiving end is configured to perform data processing according to the response message or determine time of obtaining the second data stream.

29. The communication system according to claim 27 or 28, wherein the receiving end is further configured to calculate the interval between the first data stream and the second data stream according to the latest data information of the second data stream and the starting position of the first data stream.

30. A communication system, comprising:
a server, configured to receive a message from a receiving end, wherein the message comprises data processing capability information of the receiving end; determine a response message according to the data processing capability information, wherein the response message comprises at least one of an interval between a first data stream and a second data stream, latest data information of the second data stream, time required for catching up with the second data stream by the first data stream, and rate change point information of the first data stream; and send the first data stream and the response message to the receiving end; and
the receiving end, configured to receive the first data stream and the response message sent from the server, and perform data processing according to the response message.

31. The communication system according to claim 30, wherein,
the receiving end obtains the interval between the first data stream and the second data stream according to the response message, and performs slow processing or rapid processing on the first data stream according to the interval between the first data stream and the second data stream and a buffer requirement.

32. The communication system according to claim 30 or 31, wherein data processing control information in the response message comprises: a rapid data processing parameter, a slow data processing parameter, or a delay data processing parameter; and
the receiving end performs rapid data processing according to the rapid data processing parameter, or performs slow data processing according to the slow data processing parameter, or performs delay data processing according to the delay data processing parameter.

33. A communication system, comprising:
a server, configured to determine a first message, wherein the first message comprises at least one of an interval between a first data stream and a second data stream, latest data information of the second data stream, time required for catching up with the second data stream by the first data stream, and rate change point information of the first data stream; and send the first data stream and the first message to a receiving end; and
the receiving end, configured to receive the first data stream and the first message sent from the server, and perform data processing according to the first message.

34. The communication system according to claim 33, wherein the rate change point information of the first data stream comprises:
time when a rate of the first data stream starts to change, an interval between the first data stream when the rate changes and the second data stream, data amount buffered by the receiving end or buffer time when the rate of the first data stream changes, or reduced data amount or time in the interval between the first data stream and the second data stream when the rate of the first data stream changes.

35. The communication system according to claim 33, wherein,
the receiving end obtains the interval between the first data stream and the second data stream according to the first message, and performs slow processing or rapid processing on the first data stream according to the interval between the first data stream and the second data stream and a buffer requirement.

36. The communication system according to any one of claims 33 to 35, wherein the server is further configured to receive a message from the receiving end.

37. The communication system according to claim 36, wherein the message from the receiving end comprises the buffer requirement; and
the server determines a start position of sending the first data stream according to the buffer requirement, and determines the first message according to the start position of sending the first data stream.

38. A server, comprising:
a response generation module, configured to determine a response message, wherein the response message comprises at least one of an interval between a first data stream and a second data stream, latest data information of the second data stream, and rate change point information of the first data stream; and
a sending module, configured to send the first data stream and the response message to a receiving end, to enable the receiving end to perform corresponding operation according to the response message.

39. The server according to claim 38, wherein the rate change point information of the first data stream comprises:
time when a rate of the first data stream starts to change, an interval between the first data stream when the rate changes and the second data stream, data amount buffered by the receiving end or buffer time when the rate of the first data stream changes, or reduced data amount or time in the interval between the first data stream and the second data stream when the rate of the first data stream changes.

40. The server according to claim 38 or 39, wherein the server further comprises:
a message receiving module, configured to receive a message from the receiving end, wherein the received message comprises data processing capability information of the receiving end; and
the response generation module determines the response message according to the data processing capability information.

41. The server according to claim 38 or 39, wherein the response generation module determines the response message according to the message from the receiving end and data stored by a data storage module.

42. A server, comprising:
a receiving unit, configured to receive a message from a receiving end, wherein the message comprises data processing capability information of the receiving end;
a determination unit, configured to determine a response message according to the data processing capability information, wherein the response message comprises at least one of an interval between a first data stream and a second data stream, latest data information of the second data stream, time required for catching up with the second data stream by the first data stream, and rate change point information of the first data stream; and
a sending unit, configured to send the first data stream and the response message to the receiving end, to enable the receiving end to perform data processing according to the response message.

43. The server according to claim 42, wherein the data processing capability information comprises information indicating whether the receiving end supports rapid/slow data processing, or a degree of supporting the rapid/slow data processing;
when the receiving end supports the slow data processing, the determination unit determines the response message according to the supported slow data processing capability information; and
when the receiving end supports the rapid data processing, the determination unit determines the response message according to the supported rapid data processing capability information.

44. A server, comprising:
a determination unit, configured to determine a first message, wherein the first message comprises: at least one of an interval between a first data stream and a second data stream, latest data information of the second data stream, time required for catching up with the second data stream by the first data stream, and rate change point information of the first data stream; and
a sending unit, configured to send the first data stream and the first message to a receiving end, to enable the receiving end to perform data processing according to the first message.

45. The server according to claim 44, wherein the rate change point information of the first data stream comprises:
time when a rate of the first data stream starts to change, an interval between the first data stream when the rate changes and the second data stream, data amount buffered by the receiving end or buffer time when the rate of the first data stream changes, or reduced data amount or time in the interval between the first data stream and the second data stream when the rate of the first data stream changes.

46. The server according to claim 45, further comprising:
a receiving unit, configured to receive a message from the receiving end.

47. The server according to claim 46, wherein,
the message received by the receiving unit comprises: a buffer requirement;
the determination unit is further configured to determine a start position of sending the first data stream according to the buffer requirement comprised in the message, and determine the first message according to the start position of sending the first data stream.

48. A network device, comprising:
a receiving module, configured to receive a response message from a server, wherein the response message comprises at least one of an interval between a first data stream and a second data stream, latest data information of the second data stream, and rate change point information of the first data stream; and
a determining module, configured to determine interval information according to the response message, and determine time of obtaining the second data stream according to the interval information.

49. The network device according to claim 48, wherein the rate change point information of the first data stream comprises:
time when a rate of the first data stream starts to change, an interval between the first data stream when the rate changes and the second data stream, data amount buffered by a receiving end or buffer time when the rate of the first data stream changes, or reduced data amount or time in the interval between the first data stream and the second data stream when the rate of the first data stream changes.

50. The network device according to claim 48 or 49, wherein the determination module comprises:
a response processing module, configured to obtain the interval between the first data stream and the second data stream in the response message; or determine the interval between the first data stream and the second data stream according to the latest data information of the second data stream and a starting position of the first data stream; or calculate the interval between the first data stream and the second data stream according to the rate change point information of the first data stream in the response message and the starting position of the first data stream; and
the determination sub-module, configured to determine time of obtaining the second data stream, according to the interval information determined by the response processing module and buffer information.

51. A network device, comprising:
a data receiving unit, configured to receive a first data stream and a message from a server, wherein the message from the server comprises at least one of an interval between the first data stream and a second data stream, latest data information of the second data stream, time required for catching up with the second data stream by the first data stream, and rate change point information of the first data stream; and
a data processing control unit, configured to perform data processing according to the message from the server.

52. The network device according to claim 51, wherein the rate change point information of the first data stream comprises:
time when a rate of the first data stream starts to change, an interval between the first data stream when the rate changes and the second data stream, data amount buffered by a receiving end or buffer time when the rate of the first data stream changes, or reduced data amount or time in the interval between the first data stream and the second data stream when the rate of the first data stream changes.

53. The network device according to claim 51 or 52, further comprising:
a request sending unit, configured to send a message to the server, wherein the message comprises data processing capability information or a buffer requirement of the network device.

54. The network device according to claim 53, further comprising:
an obtaining unit, configured to obtain the interval between the first data stream and the second data stream according to the message from the server, and determine data amount or time corresponding to a real interval according to the interval between the first data stream and the second data stream or an estimated first data amount buffered by the receiving end or buffer time; and
a judging unit, configured to judge whether the data amount or time corresponding to the real interval meets a pre-configured buffer requirement;
wherein, the data processing control unit is further configured to perform slow processing or rapid processing on the first data stream according to the interval between the first data stream and the second data stream and the buffer requirement.
